# FASCICULE DE BREVET EUROPEEN

(11) **EP 2 774 946 B1**
(45) Date de publication et mention de la délivrance du brevet: **24.05.2023**
(21) Numéro de dépôt: 14157245.3
(22) Date de dépôt: 28.02.2014
(51) Int. Cl.: C08J 5/22, H01M 8/10, B01D 69/14

(54) **Utilisation d'un réseau polysiloxane fonctionnalisé pour stabiliser chimiquement un polymère, membrane ainsi stabilisée, son procédé de préparation et ses utilisations**
Verwendung eines functionalisierten polysiloxannetzes zur chemischen stabilisierung eines polymers, derart stabilisierte membran, herstellungsverfahren dafür und verwendungen davon
Use of a functionalised polysiloxane network for chemically stabilizing a polymer, membrane thus stabilized, process for preparing same and uses thereof

(30) Priorité: 07.03.2013 FR 1352070
(43) Date de publication de la demande: 10.09.2014
(73) Titulaire: Commissariat à l'Énergie Atomique et aux Énergies Alternatives, 75015 Paris (FR); Centre National de la Recherche Scientifique, 75794 Paris Cedex 16 (FR); Université Grenoble Alpes, 38400 Saint Martin d'Hères (FR)
(72) Inventeur: Gonon, Laurent, 69510 SOUCIEU-EN-JARREST (FR); Mareau, Vincent, 38320 EYBENS (FR)
(74) Mandataire: Brevalex

(56) Documents cités:
- WO-A1-2012/028736
- WO-A2-2005/001037
- LIN H ET AL: "Novel hybrid polymer electrolyte membranes with high proton conductivity prepared by a silane-crosslinking technique for direct methanol fuel cells", JOURNAL OF POWER SOURCES, ELSEVIER SA, CH, vol. 196, no. 4, 15 février 2011 (2011-02-15), pages 1744-1749, XP027531095, ISSN: 0378-7753 [extrait le 2010-11-26]
- Bradley P. Ladewig ET AL: "Physical and Electrochemical Characterization of Nanocomposite Membranes of Nafion and Functionalized Silicon Oxide", Chemistry of materials, vol. 19, no. 9, 1 May 2007 (2007-05-01), pages 2372-2381, XP055493464, ISSN: 0897-4756, DOI: 10.1021/cm0628698
- SU L ET AL: "Preparation of polysiloxane modified perfluorosulfonic acid composite membranes assisted by supercritical carbon dioxide for direct methanol fuel cell", JOURNAL OF POWER SOURCES, ELSEVIER SA, CH, vol. 194, no. 1, 20 October 2009 (2009-10-20), pages 220-225, XP026446338, ISSN: 0378-7753 [retrieved on 2009-05-03]
- REN S ET AL: "Organic silica/Nafion<(>R) composite membrane for direct methanol fuel cells", JOURNAL OF MEMBRANE SCIENCE, ELSEVIER BV, NL, vol. 282, no. 1-2, 5 October 2006 (2006-10-05), pages 450-455, XP024931839, ISSN: 0376-7388, DOI: 10.1016/J.MEMSCI.2006.05.050 [retrieved on 2006-10-05]
- LAVORGNA M ET AL: "Hybridization of Nafion membranes with an acid functionalised polysiloxane: Effect of morphology on water sorption and proton conductivity", JOURNAL OF MEMBRANE SCIENCE, ELSEVIER BV, NL, vol. 330, no. 1-2, 20 March 2009 (2009-03-20), pages 214-226, XP025962414, ISSN: 0376-7388, DOI: 10.1016/J.MEMSCI.2008.12.070 [retrieved on 2009-01-16]

## Description

### DOMAINE TECHNIQUE

La présente invention appartient au domaine des systèmes membranaires et, pour certaines applications, au domaine des énergies renouvelables et notamment au domaine des piles à combustible et, plus particulièrement, des piles à combustible comprenant, en tant qu'électrolyte, une membrane conductrice de protons, telle que les piles à combustible PEMFC (« Proton Exchange Membrane Fuel Cell » pour « Pile à combustible à membrane échangeuse de protons »).

Plus particulièrement, la présente invention propose d'associer, à la membrane polymère et notamment à la membrane polymère conductrice de protons, un réseau linéaire ou tridimensionnel de type polysiloxane, apte à améliorer la durabilité des membranes polymères et notamment des membranes polymères sensibles à l'oxydation thermique, photochimique et chimique. De telles membranes polymères ainsi stabilisées peuvent notamment être utilisées comme conducteur ionique.

Ainsi, la présente invention propose, d'une part, un procédé pour stabiliser chimiquement une matrice polymère et, d'autre part, des membranes telles que des membranes conductrices (ou échangeuses) de protons présentant une stabilité chimique améliorée ainsi élaborées et des dispositifs de pile à combustible ou d'électrolyseurs comprenant de telles membranes.

### ÉTAT DE LA TECHNIQUE ANTÉRIEURE

Les piles à combustible à membrane échangeuse de protons ou PEMFC (pour l'anglais « Proton Exchange Membrane Fuel Cell » ou en français « Pile à combustible à membrane échangeuse de protons ») sont des générateurs de courant dont le principe de fonctionnement repose sur la conversion de l'énergie chimique en énergie électrique par réaction catalytique de l'hydrogène et de l'oxygène.

Une pile à combustible comporte, classiquement, un empilement de cellules élémentaires, au sein desquelles a lieu une réaction électrochimique entre deux réactifs qui sont introduits de manière continue. Le combustible, tel que l'hydrogène pour les piles fonctionnant avec des mélanges hydrogène/oxygène (PEMFC), est amené au contact de l'anode, alors que le comburant, généralement l'oxygène, est amené au contact de la cathode. L'anode et la cathode sont séparées par un électrolyte, de type membrane échangeuse d'ions. La réaction électrochimique, dont l'énergie est convertie en énergie électrique, se scinde en deux demi-réactions :
- une oxydation du combustible, se déroulant à l'interface anode/électrolyte produisant des protons H⁺, qui vont traverser l'électrolyte en direction de la cathode, et des électrons e⁻, qui rejoignent le circuit extérieur, afin de concourir à la production d'énergie électrique ;
- une réduction du comburant, se déroulant à l'interface électrolyte/cathode et impliquant les protons ayant traversé la membrane, avec production d'eau et de chaleur.

La réaction électrochimique a lieu au niveau d'un assemblage électrode-membrane-électrode ou assemblage membrane-électrodes (AME), communément appelé « coeur de pile ».

Cet assemblage très mince d'une épaisseur de l'ordre du millimètre, voire beaucoup plus faible, est composé d'une membrane polymère et de couches catalytiques présentes d'un côté et de l'autre de la membrane. La membrane permet donc de séparer les compartiments anodique et cathodique. Les couches catalytiques sont généralement constituées de nanoparticules de platine supportées sur des agrégats de carbone. Des couches de diffusion gazeuse telles que tissu de carbone, feutre... sont disposées de part et d'autre de l'AME pour assurer la conduction électrique, l'arrivée homogène des gaz réactifs et l'évacuation de l'eau produite. De plus, chaque électrode est alimentée par les gaz combustible et comburant, par exemple, à l'aide d'une plaque cannelée dite « plaque bipolaire ».

L'épaisseur de la membrane est comprise en général entre 2 et 300 µm et notamment entre 3 et 200 µm, et résulte d'un compromis entre la tenue mécanique et la chute ohmique. Le polymère qui constitue cette membrane doit donc pouvoir donner des films minces, de 10 et 150 µm et notamment inférieurs à 50 µm, denses, sans défaut. De plus, cette membrane permet la séparation des gaz. La résistance chimique et électrochimique de ces membranes permet, en général, un fonctionnement en pile sur des durées supérieures à 1 000 heures.

La membrane doit donc remplir un certain nombre de conditions relatives à ses propriétés mécaniques, physico-chimiques et électriques qui sont, entre autres, celles définies ci-après. Les propriétés mécaniques, module élastique, contrainte à la rupture, ductilité, doivent la rendre compatible avec les opérations d'assemblage comprenant, par exemple, un serrage entre des cadres métalliques. Les propriétés doivent être préservées en passant de l'état sec à l'état humide.

La membrane doit avoir une bonne stabilité thermique à l'hydrolyse et présenter une bonne résistance à la réduction et à l'oxydation i.e. une bonne stabilité chimique. La membrane doit également présenter une bonne stabilité thermomécanique et ainsi conserver ses propriétés mécaniques en température. Cette stabilité thermomécanique s'apprécie en termes de variation des propriétés mécaniques. En d'autres termes, on cherche à avoir une membrane avec de bonnes propriétés thermomécaniques (transitions mécaniques à haute température) et en même temps une très bonne résistance chimique (oxydation, réduction et hydrolyse) à la température d'utilisation du matériau donc de fonctionnement de la pile.

La membrane doit enfin posséder une forte conductivité ionique, cette conductivité étant apportée par des groupements acides, tels que des groupements acide carboxylique, acide phosphonique ou acide sulfonique reliés à la chaîne du polymère qui constitue la membrane de type membrane échangeuse de protons.

Toutefois, le développement des PEMFC est aujourd'hui limité suite à l'absence d'un électrolyte polymère qui présenterait l'ensemble des propriétés fonctionnelles nécessaires pour la conduction protonique, tout en combinant de bonnes propriétés thermomécaniques pour résister aux contraintes mécaniques imposées en pile et une bonne stabilité chimique. En effet, au-delà de 80°C, le Nafion^{®}, membrane dite de référence, de par sa très grande stabilité chimique et sa très bonne conductivité protonique, perd ses propriétés mécaniques (ramollissement, écoulement). Or des températures de fonctionnement de 100-120°C voire supérieures permettraient d'améliorer l'efficacité du système et l'utilisation de catalyseurs sans platine. Par ailleurs, l'utilisation de membranes perfluorées ne va pas sans poser des problèmes environnementaux et de coût (dangers de la chimie du fluor et recyclabilité).

Pour répondre à ces problèmes, deux axes sont actuellement explorés par la communauté scientifique, le premier concerne la synthèse de nouvelles structures polymères et le second l'introduction d'additifs pour améliorer les propriétés physico-chimiques des matériaux existants.

Dans le cadre de la synthèse de nouvelles structures polymères telles que des structures polyaromatiques ou des réseaux polymères semi-interpénétrés ou interpénétrés, l'idée centrale est, d'une part, d'améliorer la stabilité chimique des polymères en créant de nouvelles structures macromoléculaires supposées plus stables chimiquement. Ainsi, des membranes alternatives de type polyaromatique telles que le polyétheréthercétone sulfoné (sPEEK), le polyimide sulfoné (sPI), le polybenzimidazole sulfoné (sPBI) et le polysulfone sulfoné (sPU), ont été développées. Parmi ces membranes, les sPBI et sPU sont supposés plus résistants au vieillissement chimique que le sPEEK. Toutefois, ces membranes qui offrent de meilleures propriétés thermomécaniques, ne présentent pas une stabilité chimique ou des propriétés de conduction suffisantes pour les envisager comme des alternatives pertinentes aux structures perfluorées. Leur très grande sensibilité aux agents dégradants formés en pile (H₂O₂ et radicaux hydroxyles HO^{.} et hydroperoxyles HOO^{.}) est généralement considérée comme le facteur limitant leur durabilité en pile et donc celle du dispositif.

D'autre part, la mise au point de nouvelles structures polymères pour limiter les effets du vieillissement sur les propriétés physiques de la membrane peut consister à réticuler la matrice polymère ou à créer une membrane constituée d'au moins deux matrices polymères formant des réseaux polymères
- semi-interpénétrés : un des matériaux polymères est linéaire, alors que l'autre polymère forme un réseau tridimensionnel ;
- interpénétrés : chaque matériau polymère est constitué d'un réseau tridimensionnel et ces deux réseaux sont imbriqués l'un dans l'autre.

Toute la difficulté réside dans la création d'une membrane nanostructurée présentant de bonnes propriétés de conduction (typiquement une conductivité mesurée dans l'eau, à température ambiante, supérieure ou égale à 2×10⁻² S.cm⁻¹ et avantageusement supérieure à 10⁻¹ S.cm⁻¹) et conservant une imperméabilité aux gaz. A titre d'exemple, la création de réseaux réticulés limite certes les effets du vieillissement (coupures de chaînes) sur les propriétés physiques de la membrane mais a, en contrepartie, un impact défavorable sur ses propriétés de conduction (problème de gonflement et de structuration des zones hydrophiles et hydrophobes de la membrane) et sur ses propriétés mécaniques en rendant la membrane plus fragile et donc cassante.

En variante, les propriétés physico-chimiques des matériaux qui existent déjà peuvent être améliorées par l'introduction d'additifs. Ces additifs peuvent permettre d'améliorer :
- les propriétés mécaniques de la membrane : nanocharges minérales telles que, par exemples des nanoparticules de silice, de montmorillonite ou des renforts fibreux tels que des fibres de verre ou des fibres organiques ;
- les propriétés de conduction de la membrane : nanocharges fonctionnalisées en surface par des greffons acide comme par exemple des nanoparticules de silice fonctionnalisées par des chaînes de polystyrène sulfoné ;
- la stabilité chimique de la membrane : par l'addition de nanocharges fonctionnalisées chimiquement actives telles que des particules de silice fonctionnalisées, préparées préalablement avant la mise en présence de la membrane ou des précurseurs de cette dernière [1].

L'approche « stabilisation chimique » est connue depuis fort longtemps dans le domaine des polymères. A ce jour, aucun polymère industriel n'est commercialisé sans addition de stabilisants thermiques, photochimiques et/ou chimiques. Cependant une stratégie de stabilisation efficace nécessite i) l'identification des principaux vecteurs de dégradation afin de sélectionner ou synthétiser le stabilisant le plus approprié et ii) la mise au point d'une formulation spécifique au regard des contraintes imposées au matériau et de sa sensibilité à ces vecteurs de dégradation.

Les premiers travaux réalisés dans le domaine de la stabilisation chimique des polymères conducteurs ioniques sont peu nombreux et récents. A l'heure actuelle, il existe deux grandes familles de stabilisants chimiques que sont les inhibiteurs de radicaux et les décomposeurs d'hydroperoxydes.

Les phénols et les amines encombrés sont parmi les stabilisants chimiques les plus utilisés pour les polymères et ce, en tant qu'inhibiteurs de radicaux. Néanmoins, les travaux de Mikhailenko *et al* dans lesquels de la cathéchine est utilisée avec une membrane sPEEK tendent à montrer que les structures phénoliques sont peu efficaces pour augmenter la durée de vie des électrolytes polymères en pile [2]. Les travaux de Kerres *et al,* quant à eux, mettent en évidence que les amines encombrées également appelées HAS ou HALS (respectivement pour « Hindered Amine Stabiliser » et pour « Hindered Amine Light Stabiliser ») ne sont intéressantes que pour leur aptitude à créer des interactions acide/base (réticulation physique) entre le stabilisant et les fonctions acide de l'électrolyte polymère [3]. Toutefois cette rigidification obtenue par addition d'amines encombrées s'accompagne généralement d'une perte des propriétés de conduction protonique de la membrane par masquage de sites ioniques. Cependant cette réticulation physique obtenue avec ce type de stabilisant peut être considérée à tort comme une stabilisation chimique [4].

D'autres auteurs proposent d'utiliser les propriétés d'oxydo-réduction de certains oxydes métalliques pour réduire les radicaux formés en pile. A ce sujet, peuvent être cités les travaux de Coms *et al* **[5]** et ceux de Trogadas *et al* **[6]** dans lesquels des ions cérium et des ions manganèse sont introduits dans des membranes PFSA (pour « PerFluoroSulfonic Acid ») et des nanoparticules d'oxyde de cérium sont introduites dans des membranes Nafion^{®}, respectivement.

Comme l'eau oxygénée est le principal agent dégradant formé en pile, une stabilisation chimique mettant en oeuvre des décomposeurs d'hydroperoxyde est une stratégie envisageable. Toutefois, les seuls travaux basés sur l'approche d'une stabilisation par l'addition de tels décomposeurs sont ceux d'Aoki *et al* **[7].** Ces derniers proposent d'augmenter la durée de vie de la membrane en la stabilisant par l'introduction de nanoparticules de platine ce qui n'est pas sans poser des problèmes de coût et de disponibilité de ce composé chimique.

Des procédés sol-gel mis en oeuvre en présence de membranes du type polymères conducteurs ioniques ont déjà été décrits **[8-14].** Toutefois l'idée sous-jacente est généralement de créer *in situ* des nanoparticules de silice fonctionnalisées éventuellement connectées par condensation partielle de TEOS **[8]** ou un réseau polysiloxane afin d'augmenter la conductivité protonique de la membrane et ses capacités de rétention d'eau. C'est pourquoi les chaînes organiques portées par les silanes sont généralement oxydées pour créer des sites ioniques supplémentaires afin d'augmenter les propriétés de conduction des membranes **[9-14].** Les procédés sol-gel utilisent généralement des silanes présentant 3 ou 4 groupements hydrolysables et notamment des groupements méthoxy et éthoxy. Les travaux de Li *et al* mettent en oeuvre un silane comprenant 2 groupements hydrolysables et deux phényles substitués par un groupe-SO₃H, un tel phényle ne permet pas de stabiliser chimiquement la membrane obtenue **[11].**

De plus, la membrane obtenue par Lin *et al* est constituée d'une seule phase **[14].** En effet, le réseau polysiloxane formé est lié chimiquement par des liaisons covalentes à la matrice de type sPEEK via les fonctions -COOH présentes sur le sPEEK et les groupes époxy d'un des précurseurs de silane. Le procédé de préparation décrit par Lin *et al* met en oeuvre une solution de sPEEK et des précurseurs silanes et non une membrane déjà mise en forme dans laquelle les précurseurs sol-gel sont infusés et condensés.

Il est clair qu'une amélioration des propriétés de conduction d'une membrane n'est pas synonyme d'une amélioration de la stabilité chimique, ces deux propriétés membranaires étant indépendantes l'une de l'autre. A noter qu'une augmentation de la stabilité d'une membrane SPEEK peut être observée en ajoutant au système comprenant les particules de silice et le TEOS, un agent modifiant du type silane fonctionnalisé par un groupement imidazole **[8].**

La demande international WO 2005/001037 A2 [15] décrit un procédé de fabrication d'une membrane échangeuse d'ions stable et durable pour son utilisation dans des piles à combustible à haute température. Ce procédé comprend une étape consistant à mettre en contact un précurseur de silane avec un polymère possédant des sites qui peuvent être greffés par le silane en formant un réseau sol-gel Si-O-Si.

Ren [16] décrit un procédé pour préparer une membrane échangeuse d'ions pour être utilisée dans une pile à combustible qui comprend une étape consistant à mettre en contact le Nafion avec une solution comprenant de l'orthosilicate de tétraéthyle (TEOS) et du 3-mercaptopropyldiméthoxyéthoxyméthyl silane.

Bradley [17] décrit un procédé pour préparer une membrane échangeuse d'ions pour être utilisée dans une pile à combustible qui comprend une étape consistant à mettre en contact le Nafion avec une solution comprenant du 3-mercaptopropyldiméthoxyéthoxyméthyl silane, et Su [18] décrit des membranes composites à base d'acide perfluorosulfonique imprégnées d'un réseau de polysiloxane préparé en utilisant du (3-mercaptopropyl) méthyldiméthoxysilane (MPMDMS) comme précurseur.

Lavorgna [19] décrit une membrane hybride Nafion modifiée par un polysiloxane, préparée par moulage d'un mélange de solution de Nafion et d'un précurseur de polysiloxane fonctionnalisé à base de tétraéthoxysilane et d'un mercaptan-organoalkoxysilane. Le polysiloxane à l'intérieur de la membrane Nafion est interpénétré et dispersé de manière homogène et ce procédé d'hybridation augmente la stabilité thermique des membranes.

Les inventeurs se sont donc fixés pour but de développer des traitements chimiques permettant d'améliorer la durée de vie des électrolytes polymères par une stabilisation chimique et éventuellement mécanique, tout en maintenant voire en améliorant leurs propriétés de conduction protonique.

### EXPOSÉ DE L'INVENTION

Pour arriver au but fixé, les inventeurs ont créé une membrane constituée de deux phases polymères ou deux réseaux semi-interpénétrés ou interpénétrés dont au moins une des phases est chimiquement active. Plus précisément, une des phases polymères qui peut être non réticulée ou réticulée, apporte à la membrane ses propriétés de conduction protonique, alors que l'autre phase qui peut également être non réticulée ou réticulée, est chimiquement active et joue le rôle de stabilisant chimique en consommant les espèces dégradantes formées en pile mais aussi éventuellement en améliorant les propriétés physiques de la membrane telles que résistance mécanique et propriétés de conduction protonique.

L'intérêt d'un réseau stabilisant par rapport à l'addition d'un stabilisant chimique moléculaire ou greffé en surface de nanoparticules repose plus sur la qualité de sa dispersion donc son efficacité et sur sa résistance à l'élution plutôt que sur son caractère rigidifiant. Néanmoins, la stabilisation mécanique fait partie des apports du réseau stabilisant tel que mis en oeuvre dans le cadre de la présente invention.

Ce dernier est obtenu à partir d'un (ou plusieurs) composé(s) silane présentant au moins une fonction chimique stabilisante et 2, 3 ou 4 fonctions hydrolysables et, plus particulièrement, est obtenu par l'autocondensation des fonctions silanols issues de l'hydrolyse de ces fonctions hydrolysables. Cette autocondensation des silanes permet la formation d'un réseau dont la structure linéaire ou tridimensionnelle peut être modulée en fonction du (ou des) composé(s) utilisé(s) et notamment en fonction du nombre de sites hydrolysables présents sur le (ou les) composé(s) utilisé(s) et de leur stoechiométrie dans un mélange de plusieurs composés silanes.

Par ailleurs, cette réaction ayant lieu *in situ* dans la membrane et notamment dans la membrane déjà mise en forme, elle permet d'améliorer la distribution des fonctions chimiques stabilisantes dans la membrane, en surface et dans son épaisseur, et donc leur efficacité en les rendant plus accessibles aux vecteurs de dégradation générés en pile. Ce dernier point est particulièrement important car il permet d'introduire les fonctions chimiques stabilisantes en forte concentration sans pour autant impacter les propriétés physiques des membranes contrairement à ce qui peut être observé lors de l'ajout d'additifs.

En effet, une des principales limites de la stratégie du type ajout de nanocharges stabilisantes est que le taux de fonctions chimiques stabilisantes introduites dans la membrane dépend du taux de fonctionnalisation des nanocharges et de la fraction massique de ces nanocharges dans la membrane composite obtenue. Or ces nanocharges conduisant à une rigidification de la membrane, leur fraction massique ne peut être très élevée au risque de rendre la membrane trop fragile et donc inadaptée à l'application visée. Certes, l'ajustement du taux de stabilisant en jouant sur le taux de greffage des nanocharges pourrait permettre d'augmenter la teneur théorique en fonctions chimiques stabilisantes des membranes mais pas nécessairement le nombre de fonctions chimiques accessibles aux agents dégradants, les fonctions chimiques présentes au coeur du dépôt étant de fait inaccessibles.

Enfin, le réseau peut être créé *in situ* dans une membrane déjà mise en forme ou lors de la mise en forme de la membrane. Dans le premier cas appelé « imprégnation », la nanostructuration de la membrane de départ doit être parfaitement contrôlée, les propriétés de conduction de la membrane hybride dépendant essentiellement de cette organisation initiale. Après gonflement et auto-organisation des zones hydrophiles et hydrophobes de l'électrolyte polymère, le composé silane ou le mélange de composés silanes est infusé au coeur de la membrane. L'hydrolyse progressive des fonctions hydrolysables du (ou des) composé(s) silane(s) puis leur autocondensation conduit à la formation d'une chaîne macromoléculaire voire à un réseau tridimensionnel en fonction du nombre de sites hydrolysables. L'intérêt de cette technique est de faire croître le réseau stabilisant essentiellement dans les zones hydrophiles, zones où se situe l'essentiel des agents dégradants formés en pile.

Dans le second cas, l'autocondensation du (ou des) composé(s) silane(s) se produit lors de la mise en forme de la membrane par coulée évaporation, la semi-interpénétration des deux réseaux macromoléculaires (polysiloxane et polyélectrolyte polymère) se produisant lors de l'évaporation du solvant et de l'autocondensation du (ou des) composé(s) silane(s).

Après mise en forme des membranes, leurs propriétés de conduction peuvent encore être améliorées par un traitement thermique adéquat voire une pré-oxydation ménagée. En effet, si un traitement oxydatif post-mise en forme est envisagé pour créer des fonctions -SO₃H additionnelles, ce traitement doit être parfaitement contrôlé afin de limiter le taux de conversion des fonctions réactives à quelques pourcents et ainsi conserver un réseau offrant une stabilisation chimique et mécanique.

La présente invention est remarquable car elle s'applique non seulement à toute membrane échangeuse d'ions et, de façon plus générale, à toute membrane à matrice polymère et à toute matrice polymère susceptible d'être soumise à une réaction oxydante. Par « membrane échangeuse d'ions », on entend aussi bien une membrane anionique qu'une membrane cationique telle qu'une membrane échangeuse de protons.

Tout d'abord, la présente invention concerne l'utilisation pour stabiliser chimiquement une matrice polymère et/ou pour augmenter sa durabilité lorsque ladite matrice polymère est soumise à une réaction oxydante, d'un réseau polysiloxane constitué par un enchaînement de motifs identiques ou différents et de formule (I) :

X₁-[-Si(X₂)(X₃)-O-]ₙ-X₄ (I)

dans laquelle
les deux radicaux X₂ de deux motifs -Si(X₂)(X₃)-O- du réseau peuvent être identiques ou différents;

Avantageusement, ladite matrice polymère est comprise dans une membrane, telle qu'une membrane échangeuse d'ions et notamment une membrane cationique ou une membrane anionique.

Aucune liaison covalente n'existe entre la matrice polymère et le réseau polysiloxane fonctionnalisé par au moins un groupement fonctionnalisant tel que précédemment défini.

Par « stabiliser chimiquement », on entend, dans le cadre de la présente invention, rendre une matrice polymère et notamment une membrane, telle qu'une membrane échangeuse d'ions, moins sensible à l'oxydation en présence du réseau polysiloxane fonctionnalisé, qu'en l'absence de ce dernier. L'amélioration de la stabilité chimique d'une membrane, telle qu'une membrane échangeuse d'ions peut s'apprécier en comparant l'oxydation du composé modèle représentatif de l'unité de répétition de la matrice polymère notamment de la membrane avec celle du groupement fonctionnalisant. Cette comparaison peut consister à soumettre un mélange comprenant ce composé modèle représentatif et le groupement fonctionnalisant à des conditions oxydantes puis à comparer l'oxydation du composé modèle représentatif avec celle du groupement fonctionnalisant ou à comparer l'oxydation du composé modèle représentatif en présence ou en absence du groupement fonctionnalisant.

A titre d'exemple de protocole utilisable en ce qui concerne les conditions oxydantes, on utilise une 1^{ère} solution contenant le composé modèle représentatif et une 2^{nde} solution contenant le composé modèle représentatif (CMR) et le groupement fonctionnalisant (GF) dans un rapport molaire GR/CMR = 0,1. Du peroxyde d'hydrogène (H₂O₂) en solution est ajouté, de façon successive, aux solutions dans le rapport molaire suivant H₂O₂/GF = 0,5. La température des solutions est maintenue à 130°C et le temps entre deux ajouts de H₂O₂ est d'environ 8 h (8 h ± 1 h) pour permettre une décomposition induite par le H₂O₂ complète entre deux étapes successives de dégradation.

En ce qui concerne l'oxydation du composé modèle représentatif, une analyse par HPLC est réalisée sur un Agilent 1100 Series (Passeur d'échantillons G1313A, Pompe quaternaire G1311A et Détecteur UV G1315B). Les conditions expérimentales suivantes sont utilisées : colonne, phase inverse 300 SB-C18 (4.6-250 mm, 5 mm) ; composition de la phase mobile, eau avec acétate d'ammonium à 5 mM (solvant A) et acétonitrile (solvant B) ; débit de la phase mobile, 1 ml/min ; gradient de solvant linéaire, 0-75 min 95-75% (solvant A). Les spectres de masse sont obtenus en utilisant un spectromètre de masse LC/MSD SL (G1956B) équipé avec une source électrospray utilisée pour ioniser les molécules. Les données sont analysées en utilisant le logiciel Agilent Chemstation (version B.01.01). La séparation de phase est contrôlée par absorption UV à 295 et 254 nm et détection du spectre de masse. Les longueurs d'ondes précitées sont caractéristiques pour tous les produits oxydés ou non et permettent de quantifier efficacement la dégradation du composé modèle représentatif.

L'augmentation de la durabilité de la matrice polymère et notamment d'une membrane, telle qu'une membrane échangeuse d'ions s'apprécie en comparant la durabilité de la matrice polymère et notamment de la membrane, telle qu'une membrane échangeuse d'ions associée à un réseau polysiloxane fonctionnalisé selon la présente invention avec celle de la même membrane sans réseau polysiloxane fonctionnalisé.

Par conséquent et en d'autres termes, la présente invention concerne un procédé pour stabiliser chimiquement une matrice polymère ou une membrane, telle qu'une membrane échangeuse d'ions et/ou pour augmenter sa durabilité consistant à associer (combiner) la matrice polymère ou la matrice polymère de cette membrane à (avec) un réseau polysiloxane fonctionnalisé par un groupement fonctionnalisant tels que définis dans la présente invention. Cette association/combinaison ne faisant intervenir aucune liaison covalente entre ladite matrice polymère et ledit réseau polysiloxane fonctionnalisé.

Toute matrice polymère connue de l'homme du métier est utilisable dans le cadre de la présente invention. Avantageusement, on entend par « matrice polymère » la partie de base d'une membrane, telle qu'une membrane échangeuse d'ions et notamment une membrane échangeuse de protons, cette matrice donnant la forme à la membrane.

Ainsi, toute matrice polymère de base est utilisable dans le cadre de la présente invention. Notamment toute matrice polymère de base habituellement utilisée dans le domaine des piles à combustible et des électrolyseurs est utilisable dans le cadre de la présente invention. En particulier, cette matrice polymère peut être un polymère polyaromatique tel qu'un polymère choisi parmi les polyarylènes, les polysulfones, les polyimides, les polybenzimidazoles, les polyuréthanes, les polyoléfines, les polystyrènes, les polysulfures de phénylène, les polycarbonates, les polyéthylènetéréphtalates, les polyarylèneéthers, ces polymères étant éventuellement fluorés voire perfluorés et/ou sulfonés.

Avantageusement, la matrice polymère peut être choisie parmi les polymères fluorés et/ou sulfonés tels que le polyfluorure de vinylidène, les copolymères de tétrafluoroéthylène et de tétrafluoropropylène (connus sous l'abréviation « FEP »), les copolymères d'éthylène et de tétrafluoroéthylène (connus sous l'abréviation « ETFE »), le polystyrène sulfoné (connu sous l'abréviation « sPS »); les copolymères d'hexafluoropropène et de fluorure de vinylidène (connus sous l'abréviation « HFP-co-VDF »), de fluorure de vinylidène et de trifluoroéthylène (connus sous l'abréviation « VDF-co-TrFE »), de fluorure de vinylidène, de trifluoroéthylène et de monochlorotrifluoroéthylène (connus sous l'abréviation « VDF-co-TrFE-co-chloroTrFE »), les polysulfures de phénylène, les polyarylèneéthers sulfonés (comme le sPEEK), les polybenzimidazoles sulfonés (connus sous l'abréviation « sPBI ») et les polymères perfluorés contenant des groupements ioniques fonctionnels sulfoniques ou carboxyliques tels que les polymères Nafion^{®} ou Aquivion^{®}.

Les matrices polymères à base de polymères fluorés sont avantageuses, en ce sens qu'elles sont résistantes à la corrosion, présentent de bonnes propriétés mécaniques et une faible perméation aux gaz. Elles sont donc particulièrement adaptées pour constituer des membranes de piles à combustible.

Toutefois, il convient de remarquer que, compte tenu de la grande sensibilité à l'oxydation du (ou des) groupement(s) fonctionnalisant(s) le réseau polysiloxane, des matrices polymères habituellement peu ou pas intéressantes pour une application en piles à combustible sont utilisables dans le cadre de la présente invention. De telles matrices sont notamment en polymères de type sPEEK, ces dernières étant connues pour leur très faible durabilité en pile.

Par « réseau polysiloxane », on entend un réseau constitué par un enchaînement de motifs identiques ou différents et de formule (I) :

X₁-[-Si(X₂)(X₃)-O-]ₙ-X₄ (I)

dans laquelle
les deux radicaux X₂ de deux motifs -Si(X₂)(X₃)-O- du réseau peuvent être identiques ou différents ;
les deux radicaux X₃ de deux motifs -Si(X₂)(X₃)-O- du réseau peuvent être identiques ou différents ;
les radicaux X₁, X₂ et X₃ sont, indépendamment les uns des autres, choisis dans le groupe constitué par un hydrogène ; un halogène ; une amine ; une diamine ; un amide ; un acyle ; un vinyle ; un hydroxyle ; un époxy; un isocyanate ; un carboxyle ; un glycidoxy; un acryloxy tel qu'un méthacryloxy; un (hétéro)alkyle éventuellement substitué ; un groupe (hétéro)aryle éventuellement substitué ; un groupement de formule X₁-[Si(X₂)(X₃)-O-]ₙ- et un groupe alcoxyle de formule -OX₅ avec X₅ représentant un groupe (hétéro)alkyle éventuellement substitué ;
le radical X₄ est choisi dans le groupe constitué par un hydrogène ; un halogène ; une amine ; une diamine ; un amide ; un acyle ; un vinyle ; un époxy; un isocyanate; un carboxyle; un glycidoxy; un acryloxy tel qu'un méthacryloxy; un (hétéro)alkyle éventuellement substitué, un groupe (hétéro)aryle éventuellement substitué et leurs sels ; et
n représente un nombre entier compris entre 2 et 100000.

Lorsque aucun radical X₂ et aucun radical X₃ ne représentent un groupement X₁-[-Si(X₂)(X₃)-O-]ₙ-, le réseau polysiloxane mis en oeuvre est un réseau linéaire. Au contraire, si au moins un des radicaux X₂ ou X₃ représente un tel groupement i.e. un groupement X₁-[-Si(X₂)(X₃)-O-]ₙ-, le réseau polysiloxane mis en oeuvre est un réseau tridimensionnel.

A noter que, lorsque l'un au moins parmi les radicaux X₁, X₂, X₃ et X₄ représente une amine, une diamine ou un amide, cette fonction peut permettre la création d'interactions ioniques avec les sites acides et donc créer une réticulation physique mais aussi impacter les propriétés de conduction de la membrane.

Les expressions « réseau polysiloxane » et « matrice polysiloxane » sont équivalentes et utilisables de façon interchangeable.

Le réseau polysiloxane mis en oeuvre dans le cadre de la présente invention, lorsqu'il est tridimensionnel, peut comprendre des zones du type particules et notamment nanoparticules de silice, ces dernières restant connectées, de façon covalente, avec le réseau. En d'autres termes, le réseau polysiloxane mis en oeuvre dans le cadre de la présente invention ne se présente pas sous forme de particules et notamment de nanoparticules de silice individualisées et dispersées au sein de la matrice polymère.

Par « réseau polysiloxane fonctionnalisé », on entend un réseau de formule (I) telle que précédemment définie dans laquelle au moins un radical choisi entre les radicaux X₁, X₂ et X₃ est un groupement fonctionnalisant comprenant au moins une fonction thiol.

Dans le cadre de la présente invention, le réseau polysiloxane est fonctionnalisé par un groupement fonctionnalisant comprenant au moins une fonction thiol apte à stabiliser chimiquement la matrice polymère et notamment la membrane, telle qu'une membrane échangeuse d'ions. Le réseau polysiloxane fonctionnalisé correspond à la phase stabilisante de la matrice polymère et notamment la membrane. En effet, comme précédemment expliqué, ce groupement a un rôle sacrificiel. En d'autres termes, il s'oxyde plus vite que la matrice polymère et que la matrice polymère de la membrane, telle qu'une membrane échangeuse d'ions et notamment une membrane échangeuse de protons et permet, de fait, que cette dernière soit peu ou pas affectée par les conditions oxydantes, telles que les radicaux libres HO^{.} et HOO^{.} et le peroxyde d'hydrogène, présentes lors du fonctionnement d'une pile à combustible. Par la suite, le groupement fonctionnalisant le réseau polysiloxane est appelé « groupement fonctionnalisant ».

De façon avantageuse, le réseau polysiloxane mis en oeuvre dans le cadre de la présente invention comprend plusieurs groupements fonctionnalisants identiques ou différents comprenant au moins une fonction thiol.

Par conséquent, dans la présente, l'expression « le groupement fonctionnalisant » est équivalente à l'expression « les groupements fonctionnalisants ». Ces groupements fonctionnalisants peuvent être portés par le même motif -Si(X₂)(X₃)-O- ou par des motifs -Si(X₂)(X₃)-O- différents, certains des motifs -Si(X₂)(X₃)-O- du réseau pouvant ne porter aucun groupement fonctionnalisant. Ainsi, dans un motif -Si(X₂)(X₃)-O-donné porteur de groupement(s) fonctionnalisant(s), X₂ et/ou X₃ représentent un groupement fonctionnalisant identique ou différent et, dans deux motifs -Si(X₂)(X₃)-O-porteurs de groupement(s) fonctionnalisant(s), le 1^{er} X₂, le 2^{nd} X₂, le 1^{er} X₃ et/ou le 2^{nd} X₃ peuvent représenter des groupements fonctionnalisants identiques ou différents comprenant au moins une fonction thiol.

Dans le cadre de la présente invention, le groupement fonctionnalisant permet d'augmenter la stabilité chimique de la matrice polymère. Cette augmentation est due à la présence, dans le groupement fonctionnalisant, d'au moins une fonction stabilisante, cette dernière étant choisie dans le groupe constitué par une fonction thiol, qui répond à la formule -SH.

De façon avantageuse, le groupement fonctionnalisant comprend de 1 à 40 atomes de carbone, notamment de 2 à 30 atomes de carbone et, en particulier, de 3 à 20 atomes de carbone. De plus, le groupement fonctionnalisant mis en oeuvre dans le cadre de la présente invention peut comprendre au moins deux fonctions stabilisantes telles que précédemment définies, identiques ou différentes.

Selon un mode de réalisation particulier de la présente invention, le groupement fonctionnalisant a la formule ci-après :

-R₁-SH (II) ,

dans laquelle le radical R₁ représente un (hétéro)alkylène éventuellement substitué ou un (hétéro)arylène éventuellement substitué.

Dans le cadre de la présente invention, on entend, par « groupe alkyle » ou « groupe alkylène », un groupe alkyle ou alkylène, linéaire, ramifié ou cyclique, comprenant de 1 à 20 atomes de carbone, notamment de 1 à 15 atomes de carbone et en particulier, de 1 à 10 atomes de carbone et éventuellement au moins une insaturation.

Dans le cadre de la présente invention, on entend, par « groupe hétéroalkyle » ou « groupe hétéroalkylène », un groupe hétéroalkyle ou hétéroalkylène, linéaire, ramifié ou cyclique, comprenant de 1 à 20 atomes de carbone, notamment de 1 à 15 atomes de carbone et en particulier, de 1 à 10 atomes de carbone et éventuellement au moins une insaturation, le ou les hétéroatomes pouvant être N, O, P, Si ou S et notamment N, O, Si ou S. Les hétéroatomes peuvent en particulier interrompre une chaîne alkyle ou alkylène, séparer une chaîne alkylène et une chaîne alkyle et/ou séparer deux chaînes alkylènes. Dans ces deux derniers cas, les hétéroatomes peuvent se présenter sous forme de radicaux carboxyle ou thiocarbonyle.

Dans le cadre de la présente invention, on entend, par « groupe aryle » ou « groupe arylène », une structure carbonée aromatique constituée d'un ou plusieurs cycles aromatiques comportant chacun de 3 à 10 atomes de carbone et notamment de 3 à 8 atomes de carbone.

Dans le cadre de la présente invention, on entend, par « groupe hétéroaryle » ou « groupe hétéroarylène », une structure carbonée hétéroaromatique constituée d'un ou plusieurs cycles hétéroaromatiques comportant chacun de 3 à 10 atomes de carbone et notamment de 3 à 8 atomes de carbone, le ou les hétéroatomes pouvant être N, O, P, Si ou S et notamment N, O, Si ou S. Les hétéroatomes peuvent en particulier interrompre un cycle aromatique et/ou séparer deux cycles aromatiques d'un groupement aryle ou d'un groupement arylène. Dans ce dernier cas, les hétéroatomes peuvent se présenter sous forme de radicaux carboxyle ou thiocarbonyle.

Dans le cadre de la présente invention, on entend, par « groupe (hétéro)alkyle substitué », « groupe (hétéro)alkylène substitué », « groupe (hétéro)aryle substitué » ou « groupe (hétéro)arylène substitué », un groupe (hétéro)alkyle, un groupe (hétéro)alkylène, un groupe (hétéro)aryle ou un groupe (hétéro)arylène tel que précédemment défini, mono- ou polysubstitué par un groupement choisi parmi un halogène ; une amine ; une diamine ; un carboxyle ; un carboxylate ; un aldéhyde ; un ester ; un éther ; un hydroxyle ; un halogène ; un (hétéro)aryle éventuellement substitué tel que précédemment défini et notamment tel qu'un phényle, un benzyle ou un naphthyle ; un (hétéro)alkyle éventuellement substitué tel que précédemment défini et notamment tel qu'un méthyle, un éthyle, un propyle ou un hydroxypropyle ; une amine ; un amide ; un sulfonyle ; un sulfoxyde ; un sulfonate ; un acyle ; un vinyle ; un hydroxyle ; un époxy ; un phosphonate ; un acide sulfonique ; un isocyanate ; un thiol ; un glycidoxy ; un acryloxy et un groupement formule générale -SiRₐR_{b}R_{c} dans laquelle Rₐ, R_{b} et R_{c} sont, indépendamment les uns des autres, choisis dans le groupe constitué par un hydrogène ; un halogène ; une amine ; une diamine ; un amide ; un acyle ; un vinyle ; un hydroxyle ; un époxy ; un phosphonate ; un acide sulfonique ; un isocyanate ; un carboxyle ; un thiol ; un glycidoxy; un acryloxy tel qu'un méthacryloxy; un (hétéro)alkyle éventuellement substitué tel que précédemment défini; un groupe (hétéro)aryle éventuellement substitué tel que précédemment défini ; un groupe alcoxyle de formule -OR_{d} avec R_{d} représentant un groupe (hétéo)alkyle ou (hétéro)aryle éventuellement substitué tel que précédemment défini et leurs sels.

Parmi les groupements fonctionnalisants de formule -R₁-SH (II), on peut citer ceux dans lesquels R₁ représente un (hétéro)alkylène éventuellement substitué tel que précédemment défini, notamment un alkylène éventuellement substitué tel que précédemment défini et, en particulier, un méthylène, un éthylène, un propylène ou un butylène.

Dans le cadre de la présente invention, il convient de remarquer que les groupements fonctionnalisants sulfonés (i.e. présentant un groupe acide sulfonique) permettent d'améliorer non seulement la durabilité de la membrane et notamment d'une membrane échangeuse de protons mais également ses propriétés de conduction en augmentant la capacité d'échange ionique de cette dernière, qui est fonction du nombre de groupes ioniques par gramme de polymère.

La présente invention concerne aussi un procédé de préparation d'une membrane, telle qu'une membrane échangeuse d'ions et notamment une membrane échangeuse de protons comprenant une matrice polymère et un réseau polysiloxane fonctionnalisé tels que précédemment définis avec une étape de mise en contact d'une matrice polymère ou d'un de ses précurseurs avec une solution comprenant au moins un composé silane.

Il convient de noter que le procédé pour stabiliser chimiquement une matrice polymère ou une membrane, telle qu'une membrane échangeuse d'ions et/ou pour augmenter sa durabilité selon la présente invention comprend également une étape de mise en contact d'une matrice polymère ou d'un de ses précurseurs avec une solution comprenant au moins un composé silane. Lors de cette étape, il n'existe aucune limitation quant aux composés silanes utilisables pour le procédé de stabilisation, contrairement au procédé de préparation d'une membrane.

En effet, certains des documents de l'art antérieur précédemment cités tels que **[9]** et **[12]** proposent des procédés de préparation de membranes comprenant une matrice polymère et un réseau polysiloxane à groupement(s) fonctionnalisant(s) tel(s) que précédemment défini(s) et les membranes ainsi obtenues. Toutefois, dans ces procédés, les composés silanes mis en oeuvre portant le groupement fonctionnalisant portent également 3 groupements hydrolysables.

Pour cette raison, dans le procédé de préparation d'une membrane selon l'invention, au moins un composé silane de formule (XV) telle que définie ci-après est mis en oeuvre. De plus, comme les précurseurs silanes mis en oeuvre sont différents de ceux décrits dans l'art antérieur, le réseau polysiloxane obtenu est également différent de ceux de l'art antérieur et, par conséquent, les membranes obtenues via le procédé de préparation selon l'invention sont différentes des membranes de l'art antérieur.

Ainsi, le procédé de préparation selon l'invention comprend une étape consistant à mettre en contact la matrice polymère ou un ou (des) précurseur(s) de celle-ci avec une solution comprenant au moins un composé silane de formule (XV) :

(R₃₁)(R₃₂)Si(Y₁)(Y₂) (XV)

dans laquelle
les radicaux Y₁ et Y₂, identiques ou différents, représentent un groupement hydrolysable ;
les radicaux R₃₁ et R₃₂ représentent des groupements non hydrolysables, identiques ou différents ; et
le radical R₃₁ représente un groupement fonctionnalisant tel que précédemment défini,
ledit réseau polysiloxane fonctionnalisé étant obtenu par autocondensation des fonctions silanols issues de l'hydrolyse des fonctions hydrolysables des composés silanes et
le procédé comprenant un traitement oxydatif qui ne conduit qu'à la conversion d'entre 0% et 50% des fonctions stabilisantes thiols initialement présentes dans la membrane comprenant ladite matrice polymère et ledit réseau polysiloxane fonctionnalisé ayant été converties, par un traitement oxydatif, en fonctions sulfoniques, ledit traitement oxydatif consistant en une oxydation dans une solution d'eau oxygénée dans laquelle la concentration en eau oxygénée est comprise entre 0,05 et 3% en masse par rapport à la masse totale de la solution, à une température comprise entre 30 et 90°C.

Par « groupement hydrolysable », on entend un groupement apte à former une fonction silanol, lors de son hydrolyse, et dont l'autocondensation permet la création de liaisons siloxane (condensation des silanols). A titre d'exemples illustratifs et non limitatifs de tels groupements hydrolysables, on peut citer un hydroxyle, un halogénure, un alcoxyde, un acétate, un alcanoate, et un acyloxyde. Avantageusement, les groupements hydrolysables mis en oeuvre sont des groupements hydroxyles, des groupements halogènures tels que bromures, chlorures et iodure ou des groupements alcoxydes de formule -OR_{d} telle que précédemment définie.

Avantageusement, dans les composés silanes de formule (XV), les radicaux Y₁ et Y₂ sont identiques et/ou les radicaux R₃₀ et R₃₁ sont identiques et représentent, de fait, un groupement fonctionnalisant selon l'invention.

Dans le procédé selon l'invention, la solution contenant au moins un composé silane de formule (XV) est soit le composé silane de formule (XV) pur, soit une solution organique contenant au moins un composé silane de formule (XV). Dans ce cas, elle comprend donc un solvant organique. Tout solvant organique connu de l'homme du métier est utilisable. Toutefois, ce solvant est avantageusement choisi dans le groupe constitué par le méthanol, l'éthanol, le propanol, l'isopropanol, le toluène, l'acétate d'éthyle, l'acide acétique, le tétrahydrofurane, l'acétone, la diméthylformamide et l'isopropyl 1,4-dioxane.

De plus, dans le procédé selon l'invention, la solution contenant au moins un composé silane de formule (XV) peut contenir un seul composé silane de formule (XV) ou un mélange de plusieurs composés silanes de formule (XV) différents. Cette solution peut contenir en outre au moins un composé choisi parmi
(i) un composé silane de formule (XVI) :

   (R₃₃)Si(Y₃)(Y₄)(Y₅) (XVI)

   dans laquelle les radicaux Y₃, Y₄ et Y₅, identiques ou différents, représentent un groupement hydrolysable notamment tel que précédemment défini et le radical R₃₃ représente un groupement non hydrolysable et éventuellement représente un groupement fonctionnalisant tel que précédemment défini ou un groupement comportant une fonction acide telle qu'une fonction carboxylique ou sulfonique ;
(ii) un composé silane de formule (XVII) :

   (Y₆)Si(Y₇)(Y₈)(Y₉) (XVII)

   dans laquelle les radicaux Y₆, Y₇, Y₈ et Y₉, identiques ou différents, représentent un groupement hydrolysable notamment tel que précédemment défini ;
(iii) un composé silane de formule (XVIII) :

   (R₃₄)(R₃₅)Si(Y₁₀)(Y₁₁) (XVIII)

   dans laquelle les radicaux Y₁₀ et Y₁₁, identiques ou différents, représentent un groupement hydrolysable notamment tel que précédemment défini et les radicaux R₃₄ et R₃₅ représentent des groupements non hydrolysables, identiques ou différents, différents de groupements fonctionnalisants tels que précédemment définis et pouvant éventuellement représenter un groupement comportant une fonction acide telle qu'une fonction carboxylique ou sulfonique.

La solution contenant au moins un composé silane de formule (XV) peut contenir en outre un (ou plusieurs) composé(s) silane(s) de formule (XVI), un (ou plusieurs) composé(s) silane(s) de formule (XVII) et/ou un (ou plusieurs) composé(s) silane(s) de formule (XVIII).

A titre d'exemples illustratifs et non limitatifs de composés silanes de formule (XV), on peut citer le (3-mercaptopropyl)méthyldiméthoxysilane, le (3-mercaptopropyl)éthyldiéthoxysilane, le (3-mercaptopropyl)éthyldiméthoxysilane et le (3-mercaptopropyl)méthyldiéthoxysilane.

A titre d'exemples illustratifs et non limitatifs de composés silanes de formule (XVI) utilisables dans le cadre de la présente invention, on peut citer l'acide (3-trihydroxysilyl)-1-propanesulphonique, le (3-mercaptopropyl)triéthoxysilane, le (3-aminopropyl)triéthoxysilane, le (3-mercaptopropyl)triméthoxysilane, le tétrasulfure de Bis[3-(triéthoxysilyl)propyle], le méthyltriéthoxysilane et les composés de formules :

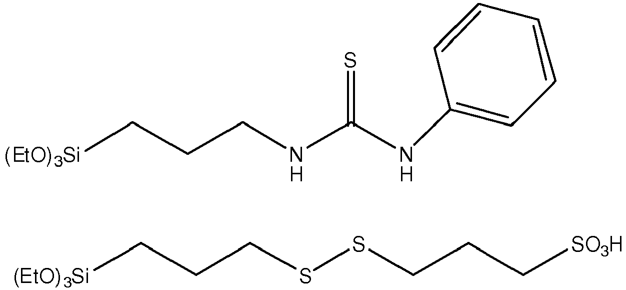

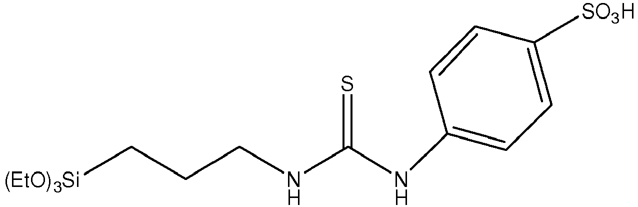

A titre d'exemples illustratifs et non limitatifs de composés silanes de formule (XVII) utilisables dans le cadre de la présente invention, on peut citer le tétraéthoxysilane (TEOS) et le tétraméthoxysilane (TEMOS).

A titre d'exemples illustratifs et non limitatifs de composés silanes de formule (XVIII) utilisables dans le cadre de la présente invention, on peut citer le diméthyldiméthoxysilane, le diéthyldiméthoxysilane, le diméthyldiéthoxysilane et le diéthyldiéthoxysilane.

Avantageusement, le (ou les) composé(s) silane(s) de formule (XV), (XVI), (XVII) et (XVIII) utilisable(s) dans le cadre de la présente invention est(sont) un (ou des) composé(s) soluble(s) dans un solvant hydrophile. Par « composé soluble dans un solvant hydrophile », on entend, dans le cadre de la présente invention, un composé qui est complètement dissous à une concentration supérieure ou égale à 1% en poids et à température ambiante dans un solvant hydrophile.

Comme précédemment expliqué, la morphologie et la densité de réticulation de la phase polysiloxane stabilisante formée sont contrôlées par le nombre de fonctions chimiques hydrolysables portées par le composé silane de formule (XV) et/ou par l'utilisation d'un mélange de composés silanes qui portent chacun plus ou moins de fonctions hydrolysables. Par ailleurs, l'utilisation de comonomères (i.e. de composés silanes) différents permet d'ajuster, en fonction du nombre et de la nature des fonctions chimiques réactives et hydrolysables et en fonction de la stoechiométrie des comonomères dans le mélange, la réactivité chimique du réseau et les propriétés thermomécaniques de la membrane hybride obtenue.

Le procédé de préparation selon l'invention comprend deux variantes principales selon que le réseau polysiloxane fonctionnalisé est préparé dans une matrice polymère déjà mise en forme ou lors de la mise en forme de cette matrice polymère.

Dans le cadre de la 1^{ère} variante qui utilise une matrice polymère préexistante, le procédé de préparation selon l'invention comprend les étapes consistant à :
a₁) éventuellement nanostructurer la matrice polymère en soumettant cette dernière à un traitement thermochimique et/ou à un traitement thermique en présence d'eau ou d'un solvant organique,
   un traitement thermochimique étant un traitement chimique destiné à greffer des fonctions polaires au niveau des chaînes polymères de la matrice polymère et éventuellement à entraîner des coupures dans les chaînes polymères générant des chaînes plus courtes et, ce à une température comprise entre 50 et 200°C ;
b₁) mettre en contact la matrice polymère à l'état gonflé, éventuellement nanostructurée avec une solution contenant au moins un composé silane de formule (XV), notamment tels que précédemment définis dans des conditions permettant l'obtention d'une membrane comprenant une matrice polymère et un réseau polysiloxane fonctionnalisé ;
c₁) soumettre la membrane obtenue à un traitement thermique pour achever la condensation des composés silanes; et
d₁) soumettre la membrane obtenue suite à l'étape (c₁) à un traitement permettant de modifier les propriétés de conduction et d'hydratation de cette dernière,
caractérisé en ce que ladite étape d₁) consiste en un traitement oxydatif qui ne conduit qu'à la conversion d'entre 0% et 50% des fonctions stabilisantes thiols initialement présentes dans la membrane comprenant ladite matrice polymère et ledit réseau polysiloxane fonctionnalisé ayant été converties, par un traitement oxydatif, en fonctions sulfoniques, ledit traitement oxydatif consistant en une oxydation dans une solution d'eau oxygénée dans laquelle la concentration en eau oxygénée est comprise entre 0,05 et 3% en masse par rapport à la masse totale de la solution, à une température comprise entre 30 et 90°C.

Cette 1^{ère} variante permet de (i) contrôler la nanostructuration de la membrane de départ (i.e. en fonction des conditions de mise en forme de la membrane hôte et des prétraitements appliqués avant l'infusion des précurseurs) et donc in fine celle de la membrane hybride obtenue; (ii) former le réseau sol-gel dans les domaines ioniques là où se concentre l'essentiel des espèces oxydantes générées en pile (infusion des précurseurs hydrosolubles en phase hydro-alcoolique) et (iii) introduire les fonctions chimiques stabilisantes en grand nombre.

Lors de l'étape (a₁) du procédé selon l'invention, la nanostructuration de la matrice polymère est mise en oeuvre pour en améliorer les propriétés de conduction protonique et d'hydratation sans trop affecter ses propriétés physiques telles que résistance mécanique et imperméabilité aux gaz.

L'étape (a₁) peut consister en un traitement thermochimique et/ou en un traitement thermique en présence d'eau ou d'un solvant organique.

Par « traitement thermochimique », on entend un traitement chimique destiné à greffer des fonctions polaires au niveau des chaînes polymères de la matrice polymère et éventuellement à entraîner des coupures dans les chaînes polymères générant des chaînes plus courtes et ce, à une température comprise entre 50 et 200°C et notamment entre 80 et 150°C. Le traitement chimique est avantageusement un traitement oxydant i.e. une oxydation en présence d'un agent oxydant tel que de l'oxygène, de l'eau oxygénée en phase liquide ou en phase gazeuse, un hydroperoxyde, de l'acide nitrique, de l'acide sulfurique, de l'ozone ou un mélange sulfochromique. Le traitement thermochimique peut être amorcé de façon photochimique. Lors de cet amorçage photochimique, les rayonnements mis en oeuvre sont typiquement les rayonnements UV et notamment à une longueur d'ondes comprise entre 100 et 400 nm, les rayonnements gamma, les rayonnements X et les neutrons.

Un traitement thermique en présence d'eau en phase liquide ou en phase gazeuse ou d'un solvant organique notamment tel que précédemment défini est avantageusement mis en oeuvre à une température comprise entre 20 et 200°C. L'effet de tels traitements peut être amplifié par l'ajout d'un oxydant tel que de l'oxygène, de l'eau oxygénée en phase liquide ou en phase gazeuse, un hydroperoxyde, de l'acide nitrique, de l'acide sulfurique, de l'ozone ou un mélange sulfochromique.

La durée des traitements utilisables lors de l'étape (a₁) du procédé selon l'invention est comprise entre 1 ms et 30 min et notamment entre 5 ms et 5 min pour les traitements sous irradiation et entre 1 min et 50 h et notamment entre 5 min et 24 h pour les traitements thermiques.

Les conditions opératoires lors de l'étape (a₁) du procédé selon l'invention telles que température, longueur d'onde d'irradiation, flux d'irradiation, durée et éventuelle présence d'un oxydant sont à ajuster, au regard de la réactivité de la matrice polymère et de l'impact de ce traitement sur ses propriétés physiques.

De même, si les propriétés de conduction et d'hydratation de la matrice polymère sont optimales post mise en forme, l'étape (a₁) du procédé selon l'invention ne s'avère pas nécessaire.

L'étape (b₁) du procédé selon l'invention consiste plus particulièrement à imprégner la matrice polymère avec une solution contenant au moins un composé silane de formule (XV) tels que précédemment définis ou encore à plonger ladite matrice polymère dans ladite solution ou encore à infuser ladite solution au sein de ladite matrice polymère.

Préalablement à l'étape (b₁) du procédé selon l'invention i.e. préalablement à l'introduction du (ou des) composé(s) silane(s), la matrice polymère doit être portée à l'état gonflé. Le gonflement de la matrice polymère peut être contrôlé par le solvant utilisé (eau ou solvant organique), le pH (un milieu acide étant généralement préconisé), le temps et la température d'immersion dans le solvant à l'état liquide ou gazeux. Ce gonflement initial de la membrane avant l'introduction des silanes permet de déterminer les zones accessibles au(x) composé(s) silane(s) présent(s) dans le milieu réactionnel et donc la fraction massique de phase stabilisante dans la membrane hybride finalement obtenue. Le taux de gonflement volumique de la membrane pourra être compris entre 0 et 200% mais idéalement entre 10 et 100%. Avantageusement, le solvant de la solution de gonflement mise en oeuvre est identique au solvant de la solution contenant au moins un composé silane de formule (XV).

Comme précédemment expliqué la quantité de composés silanes dans la solution contenant au moins un composé silane de formule (XV) peut être très variable et, de fait, la synthèse du réseau polysiloxane fonctionnalisé peut se faire en solution diluée ou très concentrée en composés silanes.

Le temps d'immersion, d'imprégnation, d'infusion ou de contact, lors de l'étape (b₁), est ajusté en fonction de la vitesse d'hydrolyse des composés silanes qui peut être modulée par la teneur en eau du milieu réactionnel, la température et le pH du mélange réactionnel. Par « milieu réactionnel » on entend le milieu ajouté à la solution contenant au moins un composé silane de formule (XV) et contenant la matrice polymère gonflée. Ce milieu réactionnel permet l'hydrolyse du (ou des) composé(s) silane(s). Ainsi, un milieu réactionnel consistant en une solution organique contenant une quantité connue d'eau est préféré à un milieu réactionnel sous forme de mélange aqueux. La température du mélange réactionnel est avantageusement comprise entre la température ambiante (i.e. 23°C ± 5°C) et 100°C. Enfin, le pH du milieu réactionnel peut être acide ou basique. Cependant, un pH compris entre 0 et 7 est généralement préférable et idéalement entre 3 et 5.

Une fois l'étape (b₁) du procédé selon l'invention achevée, la membrane obtenue peut être rincée en surface notamment avec de l'eau ou un solvant organique.

L'étape (c₁) du procédé selon l'invention consiste en un traitement thermique pour achever la condensation des composés silanes présents dans la membrane suite à l'étape (b₁). Ce traitement thermique peut être effectué à une température comprise entre 30 et 60°C sous air; entre 60 et 150°C sous vide ou sous flux d'un gaz neutre afin d'éviter une oxydation du réseau polysiloxane stabilisant ou encore entre 30 et 150°C en présence d'eau en phase liquide ou en phase gazeuse. La durée de ce traitement est ajustée, par un travail de routine pour l'homme du métier, de manière à atteindre une conversion optimale des silanols en siloxanes.

L'étape (d₁) du procédé selon l'invention consiste à soumettre la membrane obtenue suite à l'étape (c₁) à un traitement permettant de modifier et, plus particulièrement, d'améliorer les propriétés de conduction et d'hydratation de cette dernière.

Le traitement mis en oeuvre lors de l'étape (d₁) du procédé selon l'invention consiste en une oxydation douce dans une solution d'eau oxygénée à une température comprise entre 30 et 90°C. La concentration en eau oxygénée dans la solution d'eau oxygénée est comprise entre 0,05 et 3% en masse par rapport à la masse totale de la solution.

Le traitement mis en oeuvre lors de l'étape (d₁) du procédé selon l'invention permet d'une part, un gonflement de la membrane et donc la création de canaux de conduction ionique et notamment protonique et d'autre part, dans le cas d'une oxydation douce, la création de fonctions acides telles que des fonctions sulfoniques supplémentaires. Ce traitement oxydatif ne doit conduire qu'à une conversion limitée, entre 0 et 50% mais idéalement entre 0 et 10% des fonctions chimiques stabilisantes initialement présentes dans la membrane afin de ne pas trop affecter les propriétés mécaniques du réseau stabilisant et conserver un taux significatif de fonctions chimiques stabilisantes.

Dans le cadre de la 2^{nde} variante précédemment définie, le procédé de préparation selon l'invention comprend avantageusement les étapes consistant à :
a₂) mettre en contact un (ou plusieurs) précurseur(s) de la matrice polymère ou la matrice polymère en solution avec une solution contenant au moins un composé silane de formule (XV), notamment tels que précédemment définis dans des conditions permettant l'obtention d'une membrane comprenant une matrice polymère et un réseau polysiloxane fonctionnalisé ;
b₂) soumettre la membrane obtenue à un traitement thermique pour achever la condensation des composés silanes ; et
c₂) soumettre la membrane obtenue suite à l'étape (b₂) à un traitement permettant de modifier les propriétés de conduction et d'hydratation de cette dernière.

Tout ce qui a été précédemment exposé pour les étapes (c₁) et (d₁) de la 1^{ère} variante s'applique *mutatis mutandis* pour les étapes (b₂) et (c₂) de la 2^{nde} variante.

Lors de l'étape (a₂) du procédé selon l'invention, le (ou les) précurseur(s) de la matrice polymère ou la matrice polymère en solution sont mélangés avec le (ou les) précurseur(s) du réseau polysiloxane fonctionnalisé (i.e. avec le (ou les) composé(s) silane(s)). L'homme du métier saura en fonction de la matrice polymère attendue quel(s) précurseur(s) mettre en oeuvre et saura quelle solution et plus particulièrement quel solvant utiliser pour obtenir à la fois un réseau polysiloxane et une matrice polymère. Lors de l'étape (a₂) du procédé, l'autocondensation des silanes peut commencer pendant la formation de la matrice polymère et/ou peut se produire lors de la mise en forme de la membrane par coulée évaporation, la semi-interpénétration des deux réseaux macromoléculaires (polysiloxane et matrice polymère) se produisant lors de l'évaporation du solvant et de l'autocondensation des silanes.

Quels que soient le procédé et la variante mis en oeuvre pour préparer la membrane comprenant une matrice polymère et un réseau polysiloxane fonctionnalisé, aucune liaison covalente n'existe, dans la matrice résultante, entre ladite matrice polymère et ledit réseau polysiloxane fonctionnalisé.

La présente invention concerne également une membrane et notamment une membrane échangeuse de protons susceptible d'être préparée par un procédé de préparation tel que précédemment défini. De plus, la présente invention concerne une membrane dans un dispositif de pile à combustible ou dans un électrolyseur, ladite membrane étant une membrane et notamment une membrane échangeuse de protons selon l'invention ou susceptible d'être préparée par un procédé de préparation tel que précédemment défini.

La présente invention concerne, par conséquent, un dispositif de pile à combustible à membrane échangeuse de protons comprenant au moins une membrane et notamment au moins une membrane échangeuse de protons selon la présente invention ou susceptible d'être préparée par un procédé selon la présente invention.

Avantageusement, le dispositif de pile à combustible selon la présente invention comprend :
- une source de carburant, sous forme liquide ou gazeuse, qui fournit de l'hydrogène à l'anode, cette source de carburant pouvant être de l'hydrogène brut (i.e. présentant des impuretés), de l'hydrogène pur ou purifié, un mélange comprenant de l'hydrogène et au moins un gaz inerte,
- une anode revêtue par un catalyseur au niveau duquel l'hydrogène est oxydé ;
- une source oxydante, sous forme liquide ou gazeuse, qui fournit un oxydant à la cathode, cette source oxydante pouvant être de l'oxygène pur ou purifié, de l'air ou un mélange comprenant de l'oxygène et au moins un gaz inerte ;
- une cathode au niveau de laquelle l'oxydant est réduit et qui est électriquement connectée à l'anode via un conducteur électrique ; et
- une membrane et notamment une membrane échangeuse de protons selon l'invention qui correspond à l'électrolyte servant de conducteur d'ions entre l'anode et la cathode.

Pour préparer un tel dispositif, la membrane selon la présente invention est placée entre deux électrodes, par exemple, en tissu de carbone, éventuellement platiné. L'ensemble est pressé par chauffage. Cet ensemble est ensuite inséré entre deux plaques (par exemple, en graphite, appelées plaques bipolaires, qui assurent la distribution des gaz et la conductivité électrique).

La présente invention concerne également un électrolyseur comprenant au moins une membrane selon la présente invention ou susceptible d'être préparée par un procédé selon la présente invention. Un tel électrolyseur peut être un électrolyseur à membrane ou un électrolyseur à membrane échangeuse de protons tel qu'un électrolyseur de type PEM-WE (pour « Proton Exchange Membrane Water Electrolyzer ») convertissant de l'énergie électrique en énergie chimique.

La membrane selon la présente invention peut également être utilisée en électrodialyse et notamment dans le traitement des effluents industriels ou ménagers.

D'autres caractéristiques et avantages de la présente invention apparaîtront encore à l'homme du métier à la lecture des exemples ci-dessous donnés à titre illustratif et non limitatif.

### EXPOSÉ DÉTAILLÉ DE MODES DE RÉALISATION PARTICULIERS

### I. Nanostructuration et gonflement de la matrice polymère.

Comme la matrice polymère utilisée est une membrane sPEEK, cette dernière doit être soumise à une nanostructuration.

Cette nanostructuration consiste à placer la matrice polymère dans de l'acide sulfurique à 5% volumique, à 80°C, pendant 12 h, puis à rincer la membrane dans de l'eau désionisée, à 80°C, pendant 1 h.

La matrice polymère est ensuite soumise à des rinçages successifs à température ambiante dans de l'eau désionisée jusqu'à obtenir une eau de rinçage à pH égal à 7.

L'eau présente dans la matrice polymère est enfin remplacée par du méthanol.

### II. Infusion et autocondensation des composés silanes.

Cette étape consiste, d'une part, à plonger la matrice polymère obtenue comme exposé au paragraphe I, dans une solution contenant 1 ou 2 composés silanes dans du méthanol (cf Tableaux 1 et 2 ci-après), puis à ajouter 2,4 ml de milieu réactionnel comprenant de l'eau et de l'acide acétique et présentant un pH de 4.

Le mélange réactionnel est maintenu à température ambiante pendant une durée indiquée D dans les Tableaux 1 et 2 ci-après.

**Tableau 1**

| | | | | | | |
|---|---|---|---|---|---|---|
| Rapport 3/2 = silane à 3 gpts hydrolysables/ silane à 2 gpts hydrolysables | 50/50 | | 10/90 | | 0/100 | |
| (3-mercaptopropyl)méthyldiméthoxysilane (ref. 63796 Aldrich) | 0,8 ml | | 1,44 ml | | 1,6 ml | |
| Mercaptopropyltriméthoxysilane (ref. M1521 Sigma) | 0,8 ml | | 0,16 ml | | 0 | |
| Méthanol | 36 ml | | 37 ml | | 38 ml | |
| Eau + acide acétique (pH = 4) | 2,4 ml | | 2,4 ml | | 2,4 ml | |
| Durée D (h) | 120 | 240 | 120 | 240 | 120 | 240 |

**Tableau 2**

| | | | | | | | | |
|---|---|---|---|---|---|---|---|---|
| Rapport 3/2 | 100/0 | | 50/50 | | 10/90 | | 1/99 | |
| (3-mercaptopropyl)méthyl diméthoxysilane | 0 | | 0,8 ml | | 1,44 ml | | 1,584 ml | |
| Tétrasulfure de Bis[3-(triéthoxysilyl)propyle] (ref. 15200 Aldrich) | 1,6 ml | | 0,8 ml | | 0,16 ml | | 0,016 ml | |
| Méthanol | 38 ml | | 39 ml | | 35 ml | | 40 ml | |
| Eau + acide acétique (pH = 4) | 2,4 ml | | 2,4 ml | | 2,4 ml | | 2,4 ml | |
| Durée D (h) | 120 | 240 | 120 | 240 | 120 | 240 | 120 | 240 |

### III. Traitement thermique post mise en forme.

Chacun des essais des Tableaux 1 et 2 ci-dessus ont été soumis soit à un conditionnement à humidité relative à température ambiante, soit à un traitement dans une cellule de conditionnement à 60°C avec de l'argon hydraté (100% Humidité Relative) à 60°C.

### IV. Amélioration des propriétés de conduction.

Certains des essais obtenus suite au traitement tel qu'exposé au paragraphe III ont été soumis à un traitement pour améliorer leurs propriétés de conduction. Ce traitement a consisté à placer la membrane résultante dans de l'eau à 80°C et ce, pendant une durée pouvant aller jusqu'à 124 h.

### V. Observations des membranes ainsi préparées.

L'aspect visuel des membranes avant la mise en oeuvre du traitement exposé au paragraphe IV est variable. Certaines membranes sont transparentes, d'autres sont opaques ou présentent des tâches blanches principalement en surface. L'opacité ou la présence de tâches blanches traduit généralement une hétérogénéité des membranes mais ne s'accompagne pas nécessairement d'une altération des propriétés thermomécaniques ou de conduction des membranes.

Les membranes obtenues ont une épaisseur supérieure à l'épaisseur de la matrice polymère initialement mise en oeuvre (50 µm), les membranes obtenues présentent une épaisseur allant de 77 à 130 µm. Il est possible d'obtenir une augmentation de l'épaisseur ou inversement une épaisseur finale moindre notamment en utilisant un autre solvant que le méthanol.

Il a été possible de vérifier que tous les traitements aboutissent à une amélioration de la stabilité thermomécanique des membranes obtenues et limitent leur fluage au-delà de la température vitreuse.

En effet, l'analyse mécanique dynamique des membranes obtenues a montré l'effet stabilisant des traitements puisque la relaxation se produit à plus haute température pour les membranes selon l'invention comparées à la matrice polymère non traitée, ce qui prouve l'existence d'une rigidification. De plus, l'échantillon garde sa forme après le test ce qui est généralement pas le cas pour la membrane ionomère de départ non traitée.

L'efficacité des stabilisants a été vérifiée par une mesure précise de la cinétique de dégradation d'une molécule modèle dans une solution de peroxyde d'hydrogène (protocole représentatif d'un vieillissement chimique en pile) en présence ou non du stabilisant.

Les protocoles utilisés sont conformes aux protocoles décrits précédemment pour les conditions oxydantes et pour l'oxydation du composé modèle représentatif.

Une molécule modèle représentative de la matrice polymère sPEEK a été retenue pour cette étude, la molécule modèle répondant à la formule suivante :

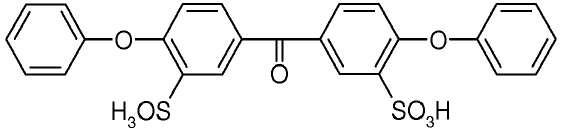

On observe que la vitesse de dégradation de cette molécule modèle est réduite d'un facteur deux en présence d'un groupement fonctionnalisant ou d'une fonction stabilisante tels que mis en oeuvre dans les silanes des Tableaux 1 et 2.

### RÉFÉRENCES BIBLIOGRAPHIQUES

**[1]** Demande internationale WO 2012/028736 au nom du CEA publiée le 8 mars 2012.
**[2]** Mikhailenko et al, 2009, « Properties of SPEEK based membranes modified with a free radical scavenger », Journal of Membrane Science, vol. 345, pages 315-322.
**[3]** Kerres et al, 2004, « Cross-Linked Polyaryl Blend Membranes for Polymer Electrolyte Fuel Cells », Fuel Cells, vol. 4, pages 105-112.
**[4]** Demande de brevet US 2005/053818 au nom de St-Arnaud et de Bebin, publiée le 10 mars 2005.
**[5]** Coms et al, 2008, « Mitigation of Perfluorosulfonic Acid Membrane Chemical Degradation Using Cerium and Manganèse Ions », Proton Exchange Membrane Fuel Cells 8, Pts 1 and 2, T. Fuller, et al., Editors. 2008, Electrochemical Society Inc. Pennington, pages 1735-1747.
**[6]** Trogadas et al, 2008, « Dégradation mitigation in polymer electrolyte membranes using cérium oxide as a regenerative free-radical scavenger », Electrochemical and Solid State Letters, vol. 11, pages B113-B116.
**[7]** Aoki et al, 2006, « Décomposition mechanism of perfluorosulfonic acid electrolyte in polymer electrolyte fuel cells », Electrochemistry Communications, vol. 8, pages 1509-1513.
**[8]** Roelofs et Schiestel, 2010, « sPEEK based composite membranes for direct ethanol fuel cell applications », Desalination, vol. 250, pages 1051-1052.
**[9]** Yen et al, 2007, « Sol-gel derived sulfonated-silica/Nafion® composite membrane for direct methanol fuel cell », Journal of Power Sources, vol. 173, pages 36-44.
**[10]** Çelik et Bozkurt, 2011, « Sol-gel synthesis of proton conductive tetrazole functional silane networks », Solid State lonics, vol. 199-200, pages 1-5.
**[11]** Li et al, 2006, « Casting Nafion-sulfonated organosilica nano-composite membranes used in direct methanol fuel cells », Journal of Membrane Science, vol. 272, pages 50-57.
**[12]** Lavorgna et al, 2007, « Hybridization of Nafion membranes by the imprégnation of functionalized siloxane precursors », Journal of Membrane Science, vol. 294, pages 159-168.
**[13]** Xue et al, 2010, « Acid-base hybrid polymer electrolyte membranes based on SPEEK », Journal of Membrane Science, vol. 350, pages 148-153.
**[14]** Lin et al, 2011, « Novel hybrid polymer electrolyte membranes with high proton conductivity prepared by a silane-crosslinking technique for direct methanol fuel cells », Journal of Power Sources, vol. 196, pages 1744-1749.
[15] Demande International WO 2005/001037 A2.
[16] Ren et al, 2006, <<Organic silica/Nafion® composite membrane for direct methanol fuel cells>>, Journal of Membrane Science, vol. 282, pages 450-455.
[17] Bradley et al, 2007, <<Physical and Electrochemical Characterization of Nanocomposite Membranes of Nafion and Functionalized Silicon Oxide», Chemistry of Materials, vol. 19, pages 2372-238.
[18] Su et al, 2009, <<Preparation of polysiloxane modified perfluorosulfonic acid composite membranes assisted by supercritical carbon dioxide for direct methanol fuel cell», Journal of Power Sources, vol. 194, pages 220-225.
[19] Lavorgna et al, 2007, <<Physical and Electrochemical Characterization of Nanocomposite Membranes of Nafion and Functionalized Silicon Oxide>>, Journal of Membrane Science, vol. 330, pages 214-226.

## Revendications

1. Utilisation pour stabiliser chimiquement une matrice polymère et/ou pour augmenter sa durabilité lorsque ladite matrice polymère est soumise à une réaction oxydante, d'un réseau polysiloxane constitué par un enchaînement de motifs identiques ou différents et de formule (I) :
X₁-[-Si(X₂)(X₃)-O-]ₙ-X₄ (I)
dans laquelle
les deux radicaux X₂ de deux motifs -Si(X₂)(X₃)-O- du réseau peuvent être identiques ou différents ;
les deux radicaux X₃ de deux motifs -Si(X₂)(X₃)-O- du réseau peuvent être identiques ou différents ;
les radicaux X₁, X₂ et X₃ sont, indépendamment les uns des autres, choisis dans le groupe constitué par un hydrogène ; un halogène ; une amine ; une diamine ; un amide ; un acyle ; un vinyle ; un hydroxyle ; un époxy ; un isocyanate ; un carboxyle ; un glycidoxy; un acryloxy tel qu'un méthacryloxy; un (hétéro)alkyle éventuellement substitué ; un groupe (hétéro)aryle éventuellement substitué ; un groupement de formule X₁-[Si(X₂)(X₃)-O-]ₙ- et un groupe alcoxyle de formule -OX₅ avec X₅ représentant un groupe (hétéo)alkyle éventuellement substitué ;
le radical X₄ est choisi dans le groupe constitué par un hydrogène ; un halogène ; une amine ; une diamine ; un amide ; un acyle ; un vinyle ; un époxy; un isocyanate; un carboxyle; un glycidoxy; un acryloxy tel qu'un méthacryloxy; un (hétéro)alkyle éventuellement substitué, un groupe (hétéro)aryle éventuellement substitué et leurs sels ;
n représente un nombre entier compris entre 2 et 100000 ; et
au moins un radical choisi entre les radicaux X₁, X₂ et X₃ est un groupement fonctionnalisant comprenant au moins une fonction thiol,
aucune liaison covalente n'existant entre ladite matrice polymère et ledit réseau polysiloxane fonctionnalisé,
ladite matrice polymère et ledit réseau polysiloxane fonctionnalisé étant semi-interpénétrés ou interpénétrés,
ledit réseau polysiloxane fonctionnalisé s'oxydant plus vite que ladite matrice polymère et ayant un rôle sacrificiel et
entre 0% et 50% des fonctions stabilisantes thiols initialement présentes dans la membrane comprenant ladite matrice polymère et ledit réseau polysiloxane fonctionnalisé ayant été converties, par un traitement oxydatif, en fonctions sulfoniques, ledit traitement oxydatif consistant en une oxydation dans une solution d'eau oxygénée dans laquelle la concentration en eau oxygénée est comprise entre 0,05 et 3% en masse par rapport à la masse totale de la solution, à une température comprise entre 30 et 90°C.

2. Utilisation selon la revendication 1, **caractérisée en ce que** ledit groupement fonctionnalisant répond la formule (II) ci-après :
-R₁-SH (II)
le radical R₁ représentant un (hétéro)alkylène éventuellement substitué ou un (hétéro)arylène éventuellement substitué.

3. Utilisation selon la revendication 1 ou 2, **caractérisé en ce que** ladite matrice polymère est comprise dans une membrane, telle qu'une membrane échangeuse d'ions et notamment une membrane cationique ou une membrane ionique.

4. Procédé de préparation d'une membrane comprenant une matrice polymère et un réseau polysiloxane fonctionnalisé tel que défini à la revendication 1 ou 2,
aucune liaison covalente n'existant entre ladite matrice polymère et ledit réseau polysiloxane fonctionnalisé,
ladite matrice polymère et ledit réseau polysiloxane fonctionnalisé étant semi-interpénétrés ou interpénétrés,
ledit procédé comprenant une étape consistant à mettre en contact la matrice polymère ou un ou (des) précurseur(s) de celle-ci avec une solution comprenant au moins un composé silane de formule (XV) :
(R₃₁)(R₃₂)Si(Y₁)(Y₂) (XV)
dans laquelle
les radicaux Y₁ et Y₂, identiques ou différents, représentent un groupement hydrolysable ;
les radicaux R₃₁ et R₃₂ représentent des groupements non hydrolysables, identiques ou différents ; et
le radical R₃₁ représente un groupement fonctionnalisant tel que défini à la revendication 1 ou 2,
ledit réseau polysiloxane fonctionnalisé étant obtenu par autocondensation des fonctions silanols issues de l'hydrolyse des fonctions hydrolysables des composés silanes et
le procédé comprenant un traitement oxydatif qui ne conduit qu'à la conversion d'entre 0 et 50% des fonctions stabilisantes thiols initialement présentes dans la membrane en fonctions sulfoniques, ledit traitement consistant en une oxydation dans une solution d'eau oxygénée dans laquelle la concentration en eau oxygénée est comprise entre 0,05 et 3% en masse par rapport à la masse totale de la solution, à une température comprise entre 30 et 90°C.

5. Procédé selon la revendication 4, **caractérisé en ce que** ledit groupement hydrolysable est choisi parmi un hydroxyle, un halogénure, un alcoxyde, un acétate, un alcanoate et un acyloxyde.

6. Procédé selon la revendication 4 ou 5, **caractérisé en ce que** ladite solution est soit le composé silane de formule (XV) pur, soit une solution organique contenant au moins un composé silane de formule (XV).

7. Procédé selon l'une quelconque des revendications 4 à 6, **caractérisé en ce que** ladite solution contient en outre au moins un composé choisi parmi
(i) un composé silane de formule (XVI) :
(R₃₃)Si(Y₃)(Y₄)(Y₅) (XVI)
dans laquelle les radicaux Y₃, Y₄ et Y₅, identiques ou différents, représentent un groupement hydrolysable et le radical R₃₃ représente un groupement non hydrolysable et éventuellement représente un groupement fonctionnalisant tel que défini à la revendication 1 ou 2 ou un groupement comportant une fonction acide telle qu'une fonction carboxylique ou sulfonique ;
(ii) un composé silane de formule (XVII) :
(Y₆)Si(Y₇)(Y₈)(Y₉) (XVII)
dans laquelle les radicaux Y₆, Y₇, Y₈ et Y₉, identiques ou différents, représentent un groupement hydrolysable ;
(iii) un composé silane de formule (XVIII) :
(R₃₄)(R₃₅)Si(Y₁₀)(Y₁₁) (XVIII)
dans laquelle les radicaux Y₁₀ et Y₁₁, identiques ou différents, représentent un groupement hydrolysable et les radicaux R₃₄ et R₃₅ représentent des groupements non hydrolysables, identiques ou différents, différents de groupements fonctionnalisants tels que à la revendication 1 ou 2 et pouvant éventuellement représenter un groupement comportant une fonction acide telle qu'une fonction carboxylique ou sulfonique.

8. Procédé selon l'une quelconque des revendications 4 à 7, **caractérisé en ce que** ledit procédé comprend les étapes consistant à :
a₁) éventuellement nanostructurer la matrice polymère en soumettant cette dernière à un traitement thermochimique et/ou à un traitement thermique en présence d'eau ou d'un solvant organique,
un traitement thermochimique étant un traitement chimique destiné à greffer des fonctions polaires au niveau des chaînes polymères de la matrice polymère et éventuellement à entraîner des coupures dans les chaînes polymères générant des chaînes plus courtes et, ce à une température comprise entre 50 et 200°C ;
b₁) mettre en contact la matrice polymère à l'état gonflé, éventuellement nanostructurée avec une solution contenant au moins un composé silane de formule (XV) dans des conditions permettant l'obtention d'une membrane comprenant une matrice polymère et un réseau polysiloxane fonctionnalisé ;
c₁) soumettre la membrane obtenue à un traitement thermique pour achever la condensation des composés silanes ; et
d₁) soumettre la membrane obtenue suite à l'étape (c₁) à un traitement permettant de modifier les propriétés de conduction et d'hydratation de cette dernière,
**caractérisé en ce que** ladite étape d₁) consiste en un traitement oxydatif qui ne conduit qu'à la conversion d'entre 0 et 50% des fonctions stabilisantes thiols initialement présentes dans la membrane en fonctions sulfoniques, ledit traitement consistant en une oxydation dans une solution d'eau oxygénée dans laquelle la concentration en eau oxygénée est comprise entre 0,05 et 3% en masse par rapport à la masse totale de la solution, à une température comprise entre 30 et 90°C.

9. Procédé selon l'une quelconque des revendications 4 à 7, **caractérisé en ce que** ledit procédé comprend les étapes consistant à :
a₂) mettre en contact un (ou plusieurs) précurseur(s) de la matrice polymère ou la matrice polymère en solution avec une solution contenant au moins un composé silane de formule (XV) dans des conditions permettant l'obtention d'une membrane comprenant une matrice polymère et un réseau polysiloxane fonctionnalisé ;
b₂) soumettre la membrane obtenue à un traitement thermique pour achever la condensation des composés silanes ; et
c₂) soumettre la membrane obtenue suite à l'étape (b₂) à un traitement permettant de modifier les propriétés de conduction et d'hydratation de cette dernière,
**caractérisé en ce que** ladite étape d₁) consiste en un traitement oxydatif qui ne conduit qu'à la conversion d'entre 0 et 50% des fonctions stabilisantes thiols initialement présentes dans la membrane en fonctions sulfoniques, ledit traitement consistant en une oxydation dans une solution d'eau oxygénée dans laquelle la concentration en eau oxygénée est comprise entre 0,05 et 3% en masse par rapport à la masse totale de la solution, à une température comprise entre 30 et 90°C.

10. Procédé selon la revendication 8 ou 9, **caractérisé en ce que** ladite étape (c₁) ou ladite étape (b₂) consiste en un traitement thermique effectué à une température comprise entre 30 et 60°C sous air; entre 60 et 150°C sous vide ou sous flux d'un gaz neutre ou encore entre 30 et 150°C en présence d'eau en phase liquide ou en phase gazeuse.

11. Membrane susceptible d'être préparée par un procédé de préparation tel que défini à l'une quelconque des revendications 4 à 10.

12. Dispositif de pile à combustible comprenant au moins une membrane telle que définie à la revendication 11 ou susceptible d'être préparée par un procédé tel que défini à l'une quelconque des revendications 4 à 10.

13. Electrolyseur comprenant au moins une membrane telle que définie à la revendication 11 ou susceptible d'être préparée par un procédé tel que défini à l'une quelconque des revendications 4 à 10.

## Patentansprüche

1. Verwendung, um eine Polymermatrix chemisch zu stabilisieren und/oder um ihre Haltbarkeit zu erhöhen, wenn die Polymermatrix einer oxidierenden Reaktion unterzogen wird, eines Polysiloxan-Netzwerks, das aus einer Verkettung gleicher oder unterschiedlicher Einheiten besteht und die Formel (I) besitzt:
X₁-[-Si(X₂)(X₃)-O-]ₙ-X₄ (I)
wobei
die zwei Reste X₂ von zwei Einheiten -Si(X₂)(X₃)-O- des Netzwerks gleich oder unterschiedlich sein können;
die zwei Reste X₃ von zwei Einheiten -Si(X₂)(X₃)-O- des Netzwerks gleich oder unterschiedlich sein können;
die Reste X₁, X₂ und X₃ unabhängig voneinander ausgewählt sind aus der Gruppe bestehend aus einem Wasserstoff; einem Halogen; einem Amin; einem Diamin; einem Amid; einem Acyl; einem Vinyl; einem Hydroxyl; einem Epoxy; einem Isocyanat; einem Carboxyl; einem Glycidoxy; einem Acryloxy wie etwa einem Methacryloxy; einem gegebenenfalls substituierten (Hetero-)Alkyl; einer gegebenenfalls substituierten (Hetero-)Aryl-Gruppe; einer Gruppe der Formel X₁-[Si(X₂)(X₃)-O-]ₙ- und einer AlkoxyGruppe der Formel-OX₅, wobei X₅ eine gegebenenfalls substituierte (Hetero-)Alkyl-Gruppe darstellt;
der Rest X₄ ausgewählt ist aus der Gruppe bestehend aus einem Wasserstoff; einem Halogen; einem Amin; einem Diamin; einem Amid; einem Acyl; einem Vinyl; einem Epoxy; einem Isocyanat; einem Carboxyl; einem Glycidoxy; einem Acryloxy wie etwa einem Methacryloxy; einem gegebenenfalls substituierten (Hetero-)Alkyl; einer gegebenenfalls substituierten (Hetero-)Aryl-Gruppe und deren Salzen;
n eine ganze Zahl im Bereich zwischen 2 und 100.000 darstellt; und
mindestens ein Rest, ausgewählt aus den Resten X₁, X₂ und X₃, eine funktionalisierende Gruppe ist, die mindestens eine Thiolfunktion umfasst,
wobei keine kovalente Bindung zwischen der Polymermatrix und dem funktionalisierten Polysiloxan-Netzwerk existiert, wobei die Polymermatrix und das funktionalisierte Polysiloxan-Netzwerk semi-interpenetriert oder interpenetriert sind,
wobei das funktionalisierte Polysiloxan-Netzwerk schneller oxidiert als die Polymermatrix und eine Opferrolle besitzt, und
wobei zwischen 0 % und 50 % der stabilisierenden Thiolfunktionen, die ursprünglich in der Membran, welche die Polymermatrix und das funktionalisierte Polysiloxan-Netzwerk umfasst, vorhanden waren, durch eine oxidative Behandlung zu Sulfonsäurefunktionen umgewandelt wurden, wobei die oxidative Behandlung in einer Oxidation in einer Wasserstoffperoxidlösung, wobei die Wasserstoffperoxid-Konzentration auf die Gesamtmasse der Lösung bezogen im Bereich zwischen 0,05 und 3 Masse-% liegt, bei einer Temperatur im Bereich zwischen 30 und 90 °C besteht.

2. Verwendung nach Anspruch 1, **dadurch gekennzeichnet, dass** die funktionalisierende Gruppe der nachstehenden Formel (II) entspricht:
-R₁-SH (II)
wobei der Rest R₁ ein gegebenenfalls substituiertes (Hetero-)Alkylen oder ein gegebenenfalls substituiertes (Hetero-)Arylen darstellt.

3. Verwendung nach Anspruch 1 oder 2, **dadurch gekennzeichnet, dass** die Polymermatrix in einer Membran, wie etwa einer Ionenaustauschmembran und insbesondere einer kationischen Membran oder einer ionischen Membran, umfasst ist.

4. Verfahren zur Herstellung einer Membran, die eine Polymermatrix und ein funktionalisiertes Polysiloxan-Netzwerk wie in Anspruch 1 oder 2 definiert umfasst, wobei keine kovalente Bindung zwischen der Polymermatrix und dem funktionalisierten Polysiloxan-Netzwerk existiert, wobei die Polymermatrix und das funktionalisierte Polysiloxan-Netzwerk semi-interpenetriert oder interpenetriert sind,
wobei das Verfahren einen Schritt umfasst, der darin besteht, die Polymermatrix oder einen oder (mehrere) Vorläufer derselben mit einer Lösung in Kontakt zu bringen, die mindestens eine Silanverbindung der Formel (XV) umfasst:
(R₃₁)(R₃₂)Si(Y₁)(Y₂) (XV)
wobei
die Reste Y₁ und Y₂, die gleich oder unterschiedlich sind, eine hydrolysierbare Gruppe darstellen;
die Reste R₃₁ und R₃₂ nicht-hydrolysierbare Gruppen darstellen, die gleich oder unterschiedlich sind; und
der Rest R₃₁ eine funktionalisierende Gruppe wie in Anspruch 1 oder 2 definiert darstellt,
wobei das funktionalisierte Polysiloxan-Netzwerk durch Autokondensation der aus der Hydrolyse der hydrolysierbaren Funktionen der Silanverbindungen entstandenen Silanolfunktionen erhalten wird, und
wobei das Verfahren eine oxidative Behandlung umfasst, die nur zur Umwandlung von zwischen 0 und 50 % der ursprünglich in der Membran vorhandenen stabilisierenden Thiolfunktionen zu Sulfonsäurefunktionen führt, wobei die Behandlung in einer Oxidation in einer Wasserstoffperoxidlösung, wobei die Wasserstoffperoxid-Konzentration auf die Gesamtmasse der Lösung bezogen im Bereich zwischen 0,05 und 3 Masse-% liegt, bei einer Temperatur im Bereich zwischen 30 und 90 °C besteht.

5. Verfahren nach Anspruch 4, **dadurch gekennzeichnet, dass** die hydrolysierbare Gruppe ausgewählt ist aus einem Hydroxyl, einem Halogenid, einem Alkoxid, einem Acetat, einem Alkanoat und einem Acyloxid.

6. Verfahren nach Anspruch 4 oder 5, **dadurch gekennzeichnet, dass** die Lösung entweder die reine Silanverbindung der Formel (XV) oder eine organische Lösung ist, die mindestens eine Silanverbindung der Formel (XV) enthält.

7. Verfahren nach einem der Ansprüche 4 bis 6, **dadurch gekennzeichnet, dass** die Lösung weiter mindestens eine Verbindung enthält, ausgewählt aus
(i) einer Silanverbindung der Formel (XVI):
(R₃₃) Si (Y₃) (Y₄) (Y₅) (XVI)
wobei die Reste Y₃, Y₄ und Y₅, die gleich oder unterschiedlich sind, eine hydrolysierbare Gruppe darstellen, und der Rest R₃₃ eine nicht-hydrolysierbare Gruppe darstellt und gegebenenfalls eine funktionalisierende Gruppe wie in Anspruch 1 oder 2 definiert darstellt, oder eine Gruppe, die eine Säurefunktion wie etwa eine Carbon- oder Sulfonsäurefunktion umfasst;
(ii) eine Silanverbindung der Formel (XVII):
(Y₆) Si (Y₇) (Y₈) (Y₉) (XVII)
wobei die Reste Y₆, Y₇, Y₈ und Y₉, die gleich oder unterschiedlich sind, eine hydrolysierbare Gruppe darstellen;
(iii) eine Silanverbindung der Formel (XVIII):
(R₃₄)(R₃₅)Si(Y₁₀)(Y₁₁) (XVIII)
wobei die Reste Y₁₀ und Y₁₁, die gleich oder unterschiedlich sind, eine hydrolysierbare Gruppe darstellen, und die Reste R₃₄ und R₃₅ nicht-hydrolysierbare Gruppen darstellen, die gleich oder unterschiedlich sind, sich von funktionalisierenden Gruppen wie in Anspruch 1 oder 2 unterscheiden, und gegebenenfalls eine Gruppe darstellen können, die eine Säurefunktion wie etwa eine Carbon- oder Sulfonsäurefunktion umfasst.

8. Verfahren nach einem der Ansprüche 4 bis 7, **dadurch gekennzeichnet, dass** das Verfahren die folgenden Schritte umfasst, bestehend im:
a₁) gegebenenfalls Nanostrukturieren der Polymermatrix, indem diese letztere einer thermochemischen Behandlung und/oder einer thermischen Behandlung in Gegenwart von Wasser oder einem organischen Lösungsmittel unterzogen wird,
wobei es sich bei einer thermochemischen Behandlung um eine chemische Behandlung handelt, die dazu bestimmt ist, polare Funktionen an die Polymerketten der Polymermatrix zu pfropfen und gegebenenfalls Spaltungen in den Polymerketten zu bewirken, die kürzere Ketten erzeugen, und dies bei einer Temperatur im Bereich zwischen 50 und 200 °C;
b₁) Inkontaktbringen der Polymermatrix im gequollenen, gegebenenfalls nanostrukturierten Zustand mit einer Lösung, die mindestens eine Silanverbindung der Formel (XV) enthält, unter Bedingungen, die das Erhalten einer Membran ermöglichen, welche eine Polymermatrix und ein funktionalisiertes Polysiloxan-Netzwerk umfasst;
c₁) Unterziehen der erhaltenen Membran einer thermischen Behandlung, um die Kondensation der Silanverbindungen zu vervollständigen; und
d₁) Unterziehen der nach dem Schritt (c₁) erhaltenen Membran einer Behandlung, die es ermöglicht, die Leitungs- und Hydratationseigenschaften dieser letzteren zu modifizieren,
**dadurch gekennzeichnet, dass** der Schritt d₁) in einer oxidativen Behandlung besteht, die nur zur Umwandlung von zwischen 0 und 50 % der ursprünglich in der Membran vorhandenen stabilisierenden Thiolfunktionen zu Sulfonsäurefunktionen führt, wobei die Behandlung in einer Oxidation in einer Wasserstoffperoxidlösung, wobei die Wasserstoffperoxid-Konzentration auf die Gesamtmasse der Lösung bezogen im Bereich zwischen 0,05 und 3 Masse-% liegt, bei einer Temperatur im Bereich zwischen 30 und 90 °C besteht.

9. Verfahren nach einem der Ansprüche 4 bis 7, **dadurch gekennzeichnet, dass** das Verfahren die folgenden Schritte umfasst, bestehend im:
a₂) Inkontaktbringen eines (oder mehrerer) Vorläufer der Polymermatrix oder der Polymermatrix in Lösung mit einer Lösung, die mindestens eine Silanverbindung der Formel (XV) enthält, unter Bedingungen, die das Erhalten einer Membran ermöglichen, welche eine Polymermatrix und ein funktionalisiertes Polysiloxan-Netzwerk umfasst;
b₂) Unterziehen der erhaltenen Membran einer thermischen Behandlung, um die Kondensation der Silanverbindungen zu vervollständigen; und
c₂) Unterziehen der nach dem Schritt (b₂) erhaltenen Membran einer Behandlung, die es ermöglicht, die Leitungs- und Hydratationseigenschaften dieser letzteren zu modifizieren,
**dadurch gekennzeichnet, dass** der Schritt d₁) in einer oxidativen Behandlung besteht, die nur zur Umwandlung von zwischen 0 und 50 % der ursprünglich in der Membran vorhandenen stabilisierenden Thiolfunktionen zu Sulfonsäurefunktionen führt, wobei die Behandlung in einer Oxidation in einer Wasserstoffperoxidlösung, wobei die Wasserstoffperoxid-Konzentration auf die Gesamtmasse der Lösung bezogen im Bereich zwischen 0,05 und 3 Masse-% liegt, bei einer Temperatur im Bereich zwischen 30 und 90 °C besteht.

10. Verfahren nach Anspruch 8 oder 9, **dadurch gekennzeichnet, dass** der Schritt (c₁) oder der Schritt (b₂) in einer thermischen Behandlung besteht, die bei einer Temperatur im Bereich zwischen 30 und 60 °C unter Luft; zwischen 60 und 150 °C unter Vakuum oder unter Strom eines neutralen Gases oder auch zwischen 30 und 150 °C in Gegenwart von Wasser in flüssiger Phase oder in Gasphase ausgeführt wird.

11. Membran, die durch ein Herstellungsverfahren wie in einem der Ansprüche 4 bis 10 definiert hergestellt werden kann.

12. Brennstoffzellenvorrichtung, die mindestens eine Membran wie in Anspruch 11 definiert umfasst oder durch ein Verfahren wie in einem der Ansprüche 4 bis 10 definiert hergestellt werden kann.

13. Elektrolyseur, der mindestens eine Membran wie in Anspruch 11 definiert umfasst oder durch ein Verfahren wie in einem der Ansprüche 4 bis 10 definiert hergestellt werden kann.

## Claims

1. Use, to chemically stabilise a polymer matrix and/or to increase its durability when said polymer matrix is subjected to an oxidising reaction, of a polysiloxane network consisting of a chain of units identical or different and having the formula (I):
X₁-[-Si(X₂)(X₃)-O-]ₙ-X₄ (I)
wherein
the two radicals X₂ of two -Si(X₂)(X₃)-O- units of the network can be identical or different;
the two radicals X₃ of two -Si(X₂)(X₃)-O- units of the network can be identical or different;
the radicals X₁, X₂ and X₃ are, independently of each other, selected from the group consisting of a hydrogen; a halogen; an amine; a diamine; an amide; an acyl; a vinyl; a hydroxyl; an epoxy; an isocyanate; a carboxyl; a glycidoxy; an acryloxy such as a methacryloxy; an optionally substituted (hetero)alkyl; an optionally substituted (hetero)aryl group; a group having the formula X₁-[Si(X₂)(X₃)-O-]ₙ- and an alkoxyl group having the formula -OX₅ with X₅ representing an optionally substituted (hetero)alkyl group;
the radical X₄ is selected from the group consisting of a hydrogen; a halogen; an amine; a diamine; an amide; an acyl; a vinyl; an epoxy; an isocyanate; a carboxyl; a glycidoxy; an acryloxy such as a methacryloxy; an optionally substituted (hetero)alkyl, an optionally substituted (hetero)aryl group and the salts thereof;
n represents a whole number between 2 and 100000; and
at least one radical selected from the radicals X₁, X₂ and X₃ is a functionalising group comprising at least one thiol function,
no covalent bond existing between said polymer matrix and said functionalised polysiloxane network,
said polymer matrix and said functionalised polysiloxane network being semi-interpenetrating or interpenetrating, said functionalised polysiloxane network being oxidised faster than said polymer matrix and having a sacrificial role and
between 0% and 50% of the thiol stabilising functions initially present in the membrane comprising said polymer matrix and said functionalised polysiloxane network having been converted, by an oxidising treatment, into sulphonic functions, said oxidising treatment consisting in an oxidation in a solution of hydrogen peroxide in which the concentration of hydrogen peroxide is between 0.05 and 3% by weight relative to the total weight of the solution, at a temperature between 30 and 90°C.

2. Use according to claim 1, **characterised in that** said functionalising group satisfies the following formula (II) :
-R₁-SH (II)
the radical R₁ representing an optionally substituted (hetero)alkylene or an optionally substituted (hetero)arylene.

3. Use according to claim 1 or 2, **characterised in that** said polymer matrix is comprised in a membrane, such as an ion exchange membrane and in particular a cationic membrane or an ionic membrane.

4. Method for preparing a membrane comprising a polymer matrix and a functionalised polysiloxane network as defined in claim 1 or 2,
no covalent bond existing between said polymer matrix and said functionalised polysiloxane network,
said polymer matrix and said functionalised polysiloxane network being semi-interpenetrating or interpenetrating, said method comprising a step of putting the polymer matrix or one or more precursor(s) thereof in contact with a solution comprising at least one silane compound having the formula (XV):
(R₃₁)(R₃₂)Si(Y₁)(Y₂) (XV)
wherein
the radicals Y₁ and Y₂, identical or different, represent a hydrolysable group;
the radicals R₃₁ and R₃₂ represent non-hydrolysable groups, identical or different; and
the radical R₃₁ represents a functionalising group as defined in claim 1 or 2,
said functionalised polysiloxane network being obtained by self-condensation of the silanol functions coming from the hydrolysis of the hydrolysable functions of the silane compounds and
the method comprising an oxidising treatment that only leads to the conversion of between 0 and 50% of the thiol stabilising functions initially present in the membrane into sulphonic functions, said treatment involving an oxidation in a solution of hydrogen peroxide in which the concentration of hydrogen peroxide is between 0.05 and 3% by weight relative to the total weight of the solution, at a temperature between 30 and 90°C.

5. Method according to claim 4, **characterised in that** said hydrolysable group is selected from a hydroxyl, a halogenide, an alkoxide, an acetate, an alkanoate and an acyloxide.

6. Method according to claim 4 or 5, **characterised in that** said solution is either the pure silane compound having the formula (XV), or an organic solution containing at least one silane compound having the formula (XV).

7. Method according to any one of claims 4 to 6, **characterised in that** said solution further contains at least one compound selected from
(i) a silane compound having the formula (XVI):
(R₃₃)Si(Y₃)(Y₄)(Y₅) (XVI)
wherein the radicals Y₃, Y₄ and Y₅, identical or different, represent a hydrolysable group and the radical R₃₃ represents a non-hydrolysable group and optionally represents a functionalising group as defined in claim 1 or 2 or a group including an acid function such as a carboxylic or sulphonic function;
(ii) a silane compound having the formula (XVII):
(Y₆)Si(Y₇)(Y₈)(Y₉) (XVII)
wherein the radicals Y₆, Y₇, Y₈ and Y₉, identical or different, represent a hydrolysable group;
(iii) a silane compound having the formula (XVIII):
(R₃₄)(R₃₅)Si(Y₁₀)(Y₁₁) (XVIII)
wherein the radicals Y₁₀ and Y₁₁, identical or different, represent a hydrolysable group and the radicals R₃₄ and R₃₅ represent non-hydrolysable groups, identical or different, different from the functionalising groups such as in claim 1 or 2 and optionally being able to represent a group including an acid function such as a carboxylic or sulphonic function.

8. Method according to any one of claims 4 to 7, **characterised in that** said method comprises the steps of:
a₁) optionally nanostructuring the polymer matrix by subjecting the latter to a thermochemical treatment and/or a thermal treatment in the presence of water or of an organic solvent,
a thermochemical treatment being a chemical treatment intended to graft polar functions at the polymer chains of the polymer matrix and optionally to cause breaks in the polymer chains generating shorter chains, at a temperature between 50 and 200°C;
b₁) putting the polymer matrix in the inflated state, optionally nanostructured, in contact with a solution containing at least one silane compound having the formula (XV) in conditions allowing to obtain a membrane comprising a polymer matrix and a functionalised polysiloxane network;
c₁) subjecting the membrane obtained to a thermal treatment to finish the condensation of the silane compounds; and
d₁) subjecting the membrane obtained after step (c₁) to a treatment allowing to modify the conduction and hydration properties of the latter,
**characterised in that** said step d₁) involves an oxidating treatment that only leads to the conversion of between 0 and 50% of the thiol stabilising functions initially present in the membrane into sulphonic functions, said treatment involving an oxidation in a solution of hydrogen peroxide in which the concentration of hydrogen peroxide is between 0.05 and 3% by weight relative to the total weight of the solution, at a temperature between 30 and 90°C.

9. Method according to any one of claims 4 to 7, **characterised in that** said method comprises the steps of:
a₂) putting one (or more) precursor(s) of the polymer matrix or the polymer matrix in solution in contact with a solution containing at least one silane compound having the formula (XV) in conditions allowing to obtain a membrane comprising a polymer matrix and a functionalised polysiloxane network;
b₂) subjecting the membrane obtained to a thermal treatment to finish the condensation of the silane compounds; and
c₂) subjecting the membrane obtain after step (b₂) to a treatment allowing to modify the conduction and hydration properties of the latter,
**characterised in that** said step d₁) involves an oxidating treatment that only leads to the conversion of between 0 and 50% of the thiol stabilising functions initially present in the membrane into sulphonic functions, said treatment involving an oxidation in a solution of hydrogen peroxide in which the concentration of hydrogen peroxide is between 0.05 and 3% by weight relative to the total weight of the solution, at a temperature between 30 and 90°C.

10. Method according to claim 8 or 9, **characterised in that** said step (c₁) or said step (b₂) involves a thermal treatment carried out at a temperature between 30 and 60°C under air, between 60 and 150°C under vacuum or under a flow of a neutral gas or between 30 and 150°C in the presence of water in liquid phase or in gaseous phase.

11. Membrane capable of being prepared by a preparation method as defined in any one of claims 4 to 10.

12. Fuel cell device comprising at least one membrane as defined in claim 11 or capable of being prepared by a method as defined in any one of claims 4 to 10.

13. Electrolyser comprising at least one membrane as defined in claim 11 or capable of being prepared by a method as defined in any one of claims 4 to 10.
